# EUROPÄISCHE PATENTSCHRIFT

(11) **EP 3 230 335 B1**
(45) Veröffentlichungstag und Bekanntmachung des Hinweises auf die Patenterteilung: **30.01.2019**
(21) Anmeldenummer: 15820056.8
(22) Anmeldetag: 30.11.2015
(51) Int. Cl.: C08G 18/20, C08G 18/28, C08G 18/62, C08G 18/79, C09D 175/04, C08G 18/80

(54) **BESCHICHTUNGSMITTELZUSAMMENSETZUNGEN UND DARAUS HERGESTELLTE BESCHICHTUNGEN UND SOWIE DEREN VERWENDUNG**
COATING COMPOSITIONS AND COATINGS PREPARED FROM THESE AND THEIR USE
COMPOSITIONS DE REVÊTEMENT, REVÊTEMENTS AINSI FABRIQUÉS ET LEUR UTILISATION

(30) Priorität: 08.12.2014 EP 14196791
(43) Veröffentlichungstag der Anmeldung: 18.10.2017
(73) Patentinhaber: BASF Coatings GmbH, 48165 Münster (DE)
(72) Erfinder: KLEIN, Guenter, 48165 Muenster (DE); FEIGL, Andreas, 48317 Drensteinfurt (DE); ARENS, Christian, 48165 Muenster (DE); STUEBBE, Wilfried, 48268 Greven (DE); WENKING, Ulrike, 48565 Steinfurt-Borghorst (DE); LAERBUSCH, Marlene, 48249 Duelmen (DE); MATHIEU, Mareike, 45721 Haltern (DE)
(74) Vertreter: BASF IP Association
(86) Internationale Anmeldenummer: PCT/EP2015/078035
(87) Internationale Veröffentlichungsnummer: WO 2016/091633

(56) Entgegenhaltungen:
- EP-A1- 0 480 089
- EP-B1- 1 664 222
- WO-A1-2008/074491

## Beschreibung

Die vorliegende Erfindung betrifft nichtwässrige Beschichtungsmittelzusammensetzungen enthaltend mindestens eine polyhydroxylgruppenhaltige Komponente (A) und mindestens eine isocyanat- und silan-gruppenhaltige Komponente (B1). Gegenstand der vorliegenden Erfindung sind außerdem die aus diesen Beschichtungsmittelzusammensetzungen hergestellten Beschichtungen sowie deren Verwendung, insbesondere für die Automobilserienlackierung, die Automobilreparaturlackierung und die Beschichtung von Anbauteilen sowie von Kunststoffen.

Aus der WO2013/081892 sind Beschichtungsmittel bekannt, die eine polyhydroxylgruppenhaltige Bindemittelkomponente und einen Vernetzer mit Isocyanatgruppen und mit Fluorethergruppen enthalten, wobei der Fluorgehalt der Beschichtungsmittel zwischen 0,1 und 3,0 Gew.-% liegt, bezogen auf den Harzfestkörper des Beschichtungsmittels. Die Vernetzer werden hierbei hergestellt durch Umsetzung von Polyisocyanaten mit fluorhaltigen Polyetherpolyolen, die mindestens eine -OCH₂CₙF₂ₙ₊₁ Gruppe aufweisen, mit n=1 oder 2. Diese Beschichtungsmittel werden als Klarlack zur Herstellung von Mehrschichtlackierungen, beispielsweise im Bereich der Automobillackierung, eingesetzt und führen zu Beschichtungen, die leicht zu reinigen sind und eine reduzierte Verschmutzungsneigung aufweisen. Außerdem weisen die resultierenden Beschichtungen gute optische Eigenschaften, ein sogenanntes gutes Appearance, und einen hohen Glanz auf.

Weiterhin sind aus der EP-B-1 664 222 fluorierte Decklacke bekannt, die als Bindemittel 10 bis 90 Gew.-%, bevorzugt 40 bis 80 Gew.-%, fluorierte Silanpolymere und bevorzugt eine polyhydroxylgruppenhaltige Bindemittel-Komponente sowie ein Polyisocyanat-Vernetzungsmittel enthalten. Die fluorierten Silanpolymere werden insbesondere durch Polymerisation von ethylenisch ungesättigten Monomeren mit Silangruppen, ethylenisch ungesättigten Monomeren mit Fluorfunktionalität und weiteren Comonomeren erhalten. Die durch die Verwendung derartiger fluorierter Silanpolymerer häufig verschlechterte Haftung der resultierenden Beschichtung zu nachfolgenden Beschichtungen wird gemäß dieser Schrift durch den Zusatz von speziellen fluorierten Urethanadditiven verbessert. Diese fluorierten Urethanadditive werden dadurch hergestellt, dass zunächst 0,45 bis 1,0 Äquivalente der Isocyanatgrupen von Diisocyanaten und Polyisocyanaten mit einem fluorierten Monoalkohol umgesetzt werden und anschließend die ggf. noch vorhandenen restlichen Isocyanatgruppen mit einem Polyoxyethylen-/Polyoxypropylenglykol oder mit einem aminofunktionellen Silan umgesetzt werden.

Ferner sind aus der WO09/086029 Beschichtungsmittel, insbesondere Füller und Klarlacke, bekannt, die ein Bindemittel (A) mit funktionellen Gruppen enthaltend aktiven Wasserstoff, insbesondere ein hydroxyfunktionelles Polyacrylatharz, einen Vernetzer (B) mit freien Isocyanatgruppen und (C) mindestens ein epoxyfunktionelles Silan enthalten. Durch den Einsatz des epoxyfunktionellen Silans im Füller und im Klarlack werden Mehrschichtlackierungen mit einer sehr guten Nasshaftung sowie einer sehr guten Beständigkeit bei der Hochdruckreinigung und im Feuchtklima/Wärmetest erhalten.

Diesen aus dem Stand der Technik bekannten Beschichtungsmitteln gelingt jedoch nicht, die besonderen Eigenschaften der verwendeten Fluorbausteine mit einer ausgezeichneten Kratzfestigkeit zu kombinieren, wie dies insbesondere für einen Premium-Automobilklarlack gefordert wird.

Außerdem sind in der noch nicht veröffentlichten europäischen Patentanmeldung EP 2013197704.3 und der noch nicht veröffentlichten europäischen Patentanmeldung EP 2013197695.3 Umsetzungsprodukte von isocyanatofunktionellen Silanen mit alpha, omega-hydroxyfunktionalisierten Oligoestern und ihre Verwendung als Haftvermittler in Beschichtungsmitteln, insbesondere lösemittelbasierten Füllern und lösemittelbasierten Klarlacken, beschrieben.

Schließlich sind aus der WO 08/74491, WO 08/74490, der WO 08/74489, der WO09/077181 und der WO 10/149236 Beschichtungsmittel bekannt, bei denen die eingesetzte, Isocyanatgruppen und Silangruppen enthaltende Verbindung (B) basiert auf bekannten Isocyanaten, bevorzugt auf den Biuret-Dimeren und Isocyanurat-Trimeren von Diisocyanaten, insbesondere von Hexamethylendiisocyanat. Diese Beschichtungsmittelzusammensetzungen weisen gegenüber herkömmlichen Polyurethan-Beschichtungsmitteln den Vorteil einer deutlich verbesserten Kratzfestigkeit bei gleichzeitig guter Witterungsbeständigkeit auf. Verbesserungsbedürftig bei diesen Beschichtungsmitteln ist die Verschmutzungsneigung der resultierenden Beschichtungen. Wünschenswert ist außerdem die Bereitstellung von Klarlackoberflächen, die sehr leicht zu reinigen sind und die oftmals auch als "easy-to-clean-Oberfläche" bezeichnet werden.

### Aufgabe

Aufgabe der vorliegenden Erfindung war es daher, Beschichtungsmittelzusammensetzungen, insbesondere für die Automobilserienlackierung und die Automobilreparaturlackierung, zur Verfügung zu stellen, die zu Beschichtungen führen, die hochgradig kratzfest sind und insbesondere einen hohen Glanzerhalt nach Kratzbelastung aufweisen. Gleichzeitig sollten die resultierenden Beschichtungen aber auch eine geringe Verschmutzungsneigung aufweisen und eine leichte Reinigung der Oberflächen (sogenannte "easy-to-clean-Oberfläche") gewährleisten.

Außerdem sollen die resultierenden Beschichtungen eine gute Chemikalien- und Säurebeständigkeit sowie eine gute Witterungsbeständigkeit aufweisen.

Weiterhin sollten sich die Beschichtungen und Lackierungen, speziell die Klarlackierungen, auch in Schichtdicken > 40 µm herstellen lassen, ohne dass Spannungsrisse auftreten. Darüber hinaus sollten die Beschichtungsmittel die üblicherweise an die Klarlackschicht bei Automobilserienlackierungen und Autoreparaturlackierungen gestellten Anforderungen erfüllen.

Schließlich sollten die neuen Beschichtungsmittel einfach und sehr gut reproduzierbar herstellbar sein und während der Lackapplikation keine ökologischen Probleme bereiten.

### Lösung der Aufgabe

Im Lichte der obengenannten Aufgabenstellung wurden nichtwässrige Beschichtungsmittelzusammensetzungen gefunden, enthaltend
(A) mindestens eine polyhydroxylgruppenhaltige Komponente (A),
(B1) mindestens eine isocyanat- und silangruppenhaltige Komponente (B1) und
(D) mindestens einen Katalysator (D) für die Vernetzung von Silangruppen,
dadurch gekennzeichnet, dass sie
(B2) mindestens eine, von der Komponente (B1) verschiedene isocyanatgruppenhaltige Komponente (B2) enthält, die zusätzlich mindestens eine Perfluoralkylgruppe der Formel (I) aufweist

CR¹₃-(CR²₂)_{f}- (I),

wobei
- R¹, R² =: unabhängig voneinander H, F und/oder CF₃ sind, aber R¹ und R² nicht gleichzeitig H sein dürfen und
- f =: 1 bis 20, bevorzugt f = 3 bis 11, besonders bevorzugt f = 5 bis 7,
ist.

Gegenstand der vorliegenden Erfindung sind außerdem mehrstufige Beschichtungsverfahren unter Verwendung dieser Beschichtungsmittelzusammensetzungen sowie die Verwendung der Beschichtungsmittelzusammensetzungen als Klarlack bzw. Anwendung des Beschichtungsverfahrens für die Automobilserienlackierung, die Automobilreparaturlackierung und/oder für die Beschichtung von Automobil-Anbauteilen, von Kunststoffsubstraten und/oder von Nutzfahrzeugen.

Es ist überraschend und war nicht vorhersehbar, dass die Beschichtungsmittelzusammensetzungen zu Beschichtungen führen, die hochgradig kratzfest sind und insbesondere einen hohen Glanzerhalt nach Kratzbelastung aufweisen, dabei gleichzeitig aber auch eine geringe Verschmutzungsneigung aufweisen und eine leichte Reinigung der Oberflächen (sogenannte "easy-to-clean-Oberfläche") gewährleisten.
Außerdem weisen die resultierenden Beschichtungen eine gute Chemikalien- und Säurebeständigkeit sowie eine gute Witterungsbeständigkeit auf. Ferner führen die Beschichtungsmittelzusammensetzungen zu einem hochgradig witterungsstabilen Netzwerk und gewährleisten gleichzeitig eine hohe Säurefestigkeit der Beschichtungen. Weiterhin lassen sich die Beschichtungen und Lackierungen, speziell die Klarlackierungen, auch in Schichtdicken > 40 µm herstellen, ohne dass Spannungsrisse auftreten. Darüber hinaus erfüllen die Beschichtungsmittel die üblicherweise an die Klarlackschicht bei Automobilserienlackierungen und Autoreparaturlackierungen gestellten Anforderungen.
Schließlich sind die neuen Beschichtungsmittel einfach und sehr gut reproduzierbar herstellbar und bereiten während der Lackapplikation keine ökologischen Probleme.

### Beschreibung der Erfindung

### Die erfindungsgemäßen Beschichtungsmittelzusammensetzungen

Insbesondere handelt es sich bei den erfindungsgemäßen Beschichtungsmittelzusammensetzungen um thermisch härtbare Beschichtungsmittel, also bevorzugt um Beschichtungsmittel, die im wesentlichen frei sind von strahlenhärtbaren ungesättigten Verbindungen, insbesondere völlig frei sind von strahlenhärtbaren ungesättigten Verbindungen.

Im Rahmen der vorliegenden Erfindung wurden zur Bestimmung von nicht-flüchtigen Anteilen (nfA, Festkörper) jeweils konstante Bedingungen gewählt, sofern nichts anderes angegeben wurde. Zur Bestimmung des nicht-flüchtigen Anteils wird eine Menge von 1 g der jeweiligen Probe auf einen Festkörperdeckel aufgebracht und für 1 h bei 130°C erhitzt, auf Raumtemperatur abgekühlt und dann zurückgewogen (in Anlehnung an ISO 3251). Ermittelt wurde der nicht-flüchtige Anteil beispielsweise von entsprechenden Polymerlösungen beziehungsweise Harzen, die in der erfindungsgemäßen Beschichtungszusammensetzung enthalten sind, um dadurch beispielsweise den Gewichtsanteil des jeweiligen Bestandteils an einer Mischung mehrerer Bestandteile oder der gesamten Beschichtungszusammensetzung einstellen und bestimmen zu können.
Der Bindemittelanteil (auch nicht-flüchtiger Anteil oder Festkörpergehalt genannt) der einzelnen Komponenten (A) bzw. (B1) bzw. (B2) bzw. (B3) bzw. (C) bzw. (E) des Beschichtungsmittels wird also dadurch bestimmt, dass eine kleine Probe der jeweiligen Komponente (A) bzw. (B1) bzw. (B2) bzw. (B3) bzw. (C) bzw. (E) eingewogen und daran anschließend der Festkörper bestimmt wird, indem für 60 Minuten bei 130°C getrocknet wird, abgekühlt wird und dann erneut gewogen wird. Der Bindemittelanteil der Komponente in Gew.-% ergibt sich dann entsprechend aus 100 multipliziert mit dem Quotient aus dem Gewicht des Rückstandes der jeweiligen Probe nach Trocknung bei 130°C geteilt durch das Gewicht der jeweiligen Probe vor der Trocknung.
Im Falle von handelsüblichen Komponenten kann der Bindemittelanteil dieser Komponente auch hinreichend genau gleich dem angegebenen Festkörpergehalt gesetzt werden, sofern nichts anderes angegeben ist.
Der Bindemittelanteil der Beschichtungsmittelzusammensetzung wird rechnerisch aus der Summe der Bindemittelanteile der einzelnen Bindemittel- und Vernetzerkomponenten (A), (B1), (B2), (B3), (C) und (E) des Beschichtungsmittels ermittelt.
Im Rahmen der Erfindung gibt die Hydroxylzahl beziehungsweise OH-Zahl die Menge Kaliumhydroxid in Milligramm an, welche der bei einer Acetylierung von einem Gramm des jeweiligen Bestandteils gebundenen molaren Menge Essigsäure äquivalent ist. Die Hydroxylzahl wird im Rahmen der vorliegenden Erfindung, sofern nicht etwas anderes angegeben ist, gemäß DIN 53240-2 (Determination of hydroxyl value - Part 2: Method with catalyst) experimentell durch Titration bestimmt.

Im Rahmen der Erfindung gibt die Säurezahl die Menge Kaliumhydroxid in Milligramm an, welche zur Neutralisation von 1 g des jeweiligen Bestandteils notwendig ist. Die Säurezahl wird im Rahmen der vorliegenden Erfindung, sofern nicht etwas anderes angegeben ist, gemäß DIN EN ISO 2114 experimentell durch Titration bestimmt.

Das massenmittlere (Mw) und zahlenmittlere (Mn) Molekulargewicht wird im Rahmen der vorliegenden Erfindung mittels Gelpermeationschromatographie bei 35°C mit einer Hochdruckflüssigkeitschromatographie-Pumpe und einem Brechungs-indexdetektor bestimmt. Als Elutionsmittel wurde Tetrahydrofuran enthaltend 0.1 Vol.-% Essigsäure mit einer Elutionsgeschwindigkeit von 1 ml/min verwendet. Die Kalibrierung wird mittels Polystyrol-Standards durchgeführt.
Die Glasübergangstemperatur Tg wird im Rahmen der Erfindung experimentell in Anlehnung an DIN 51005 "Thermische Analyse (TA) - Begriffe" und DIN 53765 "Thermische Analyse - Dynamische Differenzkalorimetrie (DDK)" bestimmt. Dabei wird eine Probe von 10 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung (N2) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird im Rahmen der vorliegenden Erfindung in Anlehnung an DIN 53765, Punkt 8.1, diejenige Temperatur im 2. Messlauf bezeichnet, bei der die Hälfte der Änderung der spezifischen Wärmekapazität (0,5 Delta cp) erreicht ist. Sie wird aus dem DDK-Diagramm (Auftragung des Wärmestroms gegen die Temperatur) ermittelt und ist die Temperatur des Schnittpunkts der Mittellinie zwischen den extrapolierten Basislinien vor und nach dem Glasübergang mit der Messkurve.

### Die polyhydroxylgruppenhaltige Komponente (A)

Als polyhydroxylgruppenhaltige Komponente (A) können alle dem Fachmann bekannten Verbindungen eingesetzt werden, welche mindestens 2 Hydroxylgruppen pro Molekül aufweisen und oligomer und/oder polymer sind. Es können als Komponente (A) auch Mischungen verschiedener oligomerer und/oder polymerer Polyole eingesetzt werden.
Die bevorzugten oligo- und/oder polymeren Polyole (A) weisen zahlenmittlere Molekulargewichte Mn >= 300 g/mol, bevorzugt Mn = 400 - 30.000 g/mol, besonders bevorzugt Mn = 500 - 15.000 g/mol, und massenmittlere Molekulargewichte Mw > 500 g/mol, bevorzugt zwischen 800 und 100.000 g/mol, insbesondere zwischen 900 und 50.000 g/mol, gemessen mittels Gelpermeationschromatographie (GPC) gegen einen Polystyrolstandard auf.
Bevorzugt sind als Komponente (A) Polyesterpolyole, Polyacrylatpolyole und/oder Polymethacrylatpolyole sowie deren Mischpolymerisate - im folgenden Polyacrylat-polyole genannt -, Polyurethanpolyole, Polysiloxanpolyole und Mischungen dieser Polyole.
Die Polyole (A) weisen bevorzugt eine OH-Zahl von 30 bis 400 mg KOH/g, insbesondere zwischen 70 und 250 mg KOH/g, auf. Im Falle der Poly-(Meth)-Acrylat-Copolymerisate kann die OH-Zahl auch durch Berechnung auf Basis der eingesetzten OH-funktionellen Monomere ausreichend genau bestimmt werden.
Die Polyole (A) weisen bevorzugt eine Säurezahl zwischen 0 und 30 mg KOH/g auf.
Die Glasübergangstemperaturen, gemessen mit Hilfe von DSC-Messungen nach DIN-EN-ISO 11357-2, der Polyole liegen bevorzugt zwischen -150 und 100 °C, besonders bevorzugt zwischen -120°C und 80°C.

Polyurethanpolyole werden vorzugsweise durch Umsetzung von oligomeren Polyolen, insbesondere von Polyesterpolyol-Präpolymeren, mit geeigneten Di- oder Polyisocyanaten hergestellt und sind beispielsweise in EP-A-1 273 640 beschrieben. Insbesondere werden Umsetzungsprodukte von Polyesterpolyolen mit aliphatischen und/oder cycloaliphatischen Di- und/oder Polyisocyanaten eingesetzt.
Die erfindungsgemäß bevorzugt eingesetzten Polyurethanpolyole weisen ein zahlenmittleres Molekulargewicht Mn >= 300 g/mol, bevorzugt Mn = 700 - 2.000 g/mol, besonders bevorzugt Mn = 700 - 1.300 g/mol, sowie vorzugsweise ein massenmittleres Molekulargewicht Mw > 500 g/mol, bevorzugt zwischen 1.500 und 3.000 g/mol, insbesondere zwischen 1.500 und 2.700 g/mol auf, jeweils gemessen mittels Gelpermeationschromatographie (GPC) gegen einen Polystyrolstandard.

Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Als polyhydroxylgruppenhaltige Komponente (A) werden besonders bevorzugt Polyesterpolyole, Polyacrylatpolyole, Polymethacrylatpolyole, Polyurethanpolyole oder deren Mischungen und ganz besonders bevorzugt Mischungen von Poly(meth)acrylatpolyolen eingesetzt.

Die erfindungsgemäß bevorzugt eingesetzten Polyesterpolyole (A) weisen ein zahlenmittleres Molekulargewicht Mn >= 300 g/mol, bevorzugt Mn = 400 - 10.000 g/mol, besonders bevorzugt Mn = 500 - 5.000 g/mol, sowie vorzugsweise ein massenmittleres Molekulargewicht Mw > 500 g/mol, bevorzugt zwischen 800 und 50.000 g/mol, insbesondere zwischen 900 und 10.000 g/mol auf, jeweils gemessen mittels Gelpermeationschromatographie (GPC) gegen einen Polystyrolstandard.

Die erfindungsgemäß bevorzugt eingesetzten Polyesterpolyole (A) weisen bevorzugt eine OH-Zahl von 30 bis 400 mg KOH/g, insbesondere zwischen 100 und 250 mg KOH/g, auf.

Die erfindungsgemäß bevorzugt eingesetzten Polyesterpolyole (A) weisen bevorzugt eine Säurezahl zwischen 0 und 30 mg KOH/g auf.
Geeignete Polyesterpolyole sind beispielsweise auch in EP-A-0 994 117 und EP-A-1 273 640 beschrieben.

Die erfindungsgemäß bevorzugt eingesetzten Poly(meth)acrylatpolyole (A) sind in der Regel Copolymerisate und weisen vorzugsweise ein zahlenmittleres Molekulargewicht Mn >= 300 g/mol, bevorzugt Mn = 500 - 15.000 g/mol, besonders bevorzugt Mn = 900 - 10.000 g/mol, sowie vorzugsweise massenmittlere Molekulargewichte Mw zwischen 500 und 20.000 g/mol, insbesondere zwischen 1.000 und 15.000 g/mol auf, jeweils gemessen mittels Gelpermeationschromatographie (GPC) gegen einen Polystyrolstandard.
Die Glasübergangstemperatur der Copolymerisate liegt in der Regel zwischen -100 und 100 °C, insbesondere zwischen -40 und < 60 °C (gemessen mittels DSC-Messungen nach DIN-EN-ISO 11357-2).
Die Poly(meth)acrylatpolyole (A) weisen bevorzugt eine OH-Zahl von 60 bis 300 mg KOH/g, insbesondere zwischen 70 und 250 mg KOH/g, sowie eine Säurezahl zwischen 0 und 30 mg KOH/g auf.
Die Hydroxylzahl (OH-Zahl) und die Säurezahl werden wie oben beschrieben bestimmt (DIN 53240-2 bzw. DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat eingesetzt.

Als weitere Monomerbausteine werden für die Poly(meth)acrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.
Als weitere Monomerbausteine für die Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

### Die hydroxylgruppenhaltige Komponente (C)

Die erfindungsgemäßen Beschichtungsmittelzusammensetzungen können ggf. außer der polyhydroxylgruppenhaltigen Komponente (A) noch ein oder mehrere, von der Komponente (A) verschiedene, monomere hydroxylgruppenhaltige Komponenten (C) enthalten. Bevorzugt nehmen diese Komponenten (C) einen Anteil von 0 bis 10 Gew.-%, besonders bevorzugt von 0 bis 5 Gew.-%, jeweils bezogen auf den Bindemittelanteil der Beschichtungsmittelzusammensetzung (also jeweils bezogen auf die Summe aus dem Bindemittelanteil der Komponente (A) plus dem Bindemittelanteil der Komponente (B1) plus dem Bindemittelanteil der Komponente (B2) plus dem Bindemittelanteil der Komponente (B3) plus dem Bindemittelanteil der Komponente (C) plus dem Bindemittelanteil der Komponente (E)), ein.

Als hydroxylgruppenhaltige Komponente (C) werden niedermolekulare Polyole eingesetzt.
Als niedermolekulare Polyole werden beispielsweise Diole, wie bevorzugt Ethylenglykol, Di- und Tri-ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerythritol sowie Dipentaerythritol, eingesetzt. Bevorzugt werden solche niedermolekularen Polyole (C) in untergeordneten Anteilen der Polyolkomponente (A) beigemischt.

### Die Kombination der Komponente (B1) und der Komponente (B2) Die isocyanat- und silangruppenhaltige Komponente (B1)

Es ist erfindungswesentlich, dass die Beschichtungsmittel mindestens eine, von der Komponente (B2) verschiedene, isocyanat- und silangruppenhaltige Komponente (B1) mit einem von einem oder mehreren Polyisocyanaten abgeleiteten Grundkörper enthalten.

Die als Grundkörper für die erfindungsgemäß eingesetzte isocyanatgruppenhaltige Komponente (B1) dienenden Polyisocyanate sind bevorzugt an sich bekannte substituierte oder unsubstituierte Polyisocyanate, wie z.B. 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiiso-cyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate.

Bevorzugt werden als Grundkörper für die erfindungsgemäß eingesetzte isocyanatgruppenhaltige Komponente (B1) aliphatische und/oder cycloaliphatische Polyisocyanate eingesetzt. Beispiele für bevorzugt als Grundkörper eingesetzte aliphatische Polyisocyanate sind Tetramethylen-1,4-diisocyanat, Hexamethylen-1,6-diisocyanat, 2,2,4-Trimethylhexane-1,6-diisocyanat, Ethylendiisocyanat, 1,12-Dodecandiisocyanat, Isophorondiisocyanat, 4,4'-Methylendicyclohexyldiisocyanat (z.B. Desmodur ® W der Fa. Bayer AG) und Mischungen der vorgenannten Polyisocyanate.

Weiterhin bevorzugt als Grundkörper für die erfindungsgemäß eingesetzte isocyanatgruppenhaltige Komponente (B1) sind die durch Trimerisierung, Dimerisierung, Urethan-, Biuret-, Uretdion- und/oder Allophanatbildung von einem solchen aliphatischen Polyisocyanat abgeleiteten Polyisocyanate, insbesondere das Biuret und/oder das Allophanat und/oder das Isocyanurat von einem solchen aliphatischen Polyisocyanat. In einer weiteren Ausführungsform der Erfindung sind die Isocyanatgrundkörper für die Komponente (B1) Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4, 598,131 beschrieben.
Besonders bevorzugt als Grundkörper für die erfindungsgemäß eingesetzte isocyanatgruppenhaltige Komponente (B1) sind Hexamethylendiisocyanat, Isophorondiisocyanat und 4,4'-Methylendicyclohexyldiisocyanat und/oder dessen Isocyanurate und/oder dessen Biurete und/oder dessen Uretdione und/oder dessen Allophanate.

Ganz besonders bevorzugt als Grundkörper für die erfindungsgemäß eingesetzte isocyanatgruppenhaltige Komponente (B1) sind Hexamethylendiisocyanat und/oder dessen Biuret und/oder Allophanat und/oder Isocyanurat und/oder dessen Uretdion sowie Mischungen der genannten Polyisocyanate.
Insbesondere weist die Komponente (B1) mindestens eine freie oder blockierte Isocyanatgruppe und mindestens eine Silangruppe der Formel (II)

-X-Si-R"ₓG₃₋ₓ (II)

mit
G = identische oder unterschiedliche hydrolysierbare Gruppen,
X = organischer Rest, insbesondere linearer und/oder verzweigter Alkylen- oder Cycloalkylenrest mit 1 bis 20 Kohlenstoffatomen, ganz besonders bevorzugt X = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
x = 0 bis 2, bevorzugt 0 bis 1, besonders bevorzugt x = 0,
auf.

Dabei hat auch die Struktur dieser Silanreste einen Einfluß auf die Reaktivität und damit auch auf die möglichst weitgehende Umsetzung während des Härtens der Beschichtung. Hinsichtlich der Verträglichkeit und der Reaktivität der Silane werden Silane mit 3 hydrolysierbaren Gruppen bevorzugt eingesetzt, d.h. x = 0.
Die hydrolysierbaren Gruppen G können ausgewählt werden aus der Gruppe der Halogene, insbesondere Chlor und Brom, aus der Gruppe der Alkoxygruppen, aus der Gruppe der Alkylcarbonylgruppen und aus der Gruppe der Acyloxygruppen. Besonders bevorzugt sind Alkoxygruppen (OR').

Die Struktureinheiten (II) werden bevorzugt durch Umsetzung von - bevorzugt aliphatischen - Polyisocyanaten bzw. deren durch Trimerisierung, Dimerisierung, Urethan-, Biuret-, Uretdion- und/oder Allophanatbildung abgeleiteten Polyisocyanaten mit mindestens einem aminofunktionellen Silan (IIa)

H-NR_{w}-(X-Si-R"ₓG₃₋ₓ)_{2-w} (IIa)

eingeführt, wobei X, R", G und x die bei Formel (II) angegebene Bedeutung haben und R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, und w = 0 oder 1 ist.

Geeignet sind beispielsweise die weiter hinten als Beispiele für die Verbindungen (IIIa) genannten primären Aminosilane oder die ebenfalls als Beispiele für die Verbindungen (IIIa) genannten sekundären N-Alkylaminosilane oder die als Beispiele für die Verbindungen (IVa) genannten Aminobissilane.
Bevorzugt weist die Komponente (B1) mindestens eine Isocyanatgruppe sowie mindestens eine Struktureinheit (III) der Formel (III)

-NR-(X-SiR"x(OR')3-x) (III),

und/oder
mindestens eine Struktureinheit (IV) der Formel (IV)

-N(X-SiR"x(OR')3-x)n(X'-SiR"y(OR')3-y)m (IV),

auf, wobei
R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,
X, X' = linearer und/oder verzweigter Alkylen- oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 sowie x, y = 0 bis 2 ist.
Besonders bevorzugt weist die Komponente (B1) mindestens eine Isocyanatgruppe sowie mindestens eine Struktureinheit (III) der Formel (III) und mindestens eine Struktureinheit (IV) der Formel (IV) auf.

Die jeweiligen bevorzugten Alkoxyreste (OR') können gleich oder verschieden sein, entscheidend für den Aufbau der Reste ist jedoch, inwiefern diese die Reaktivität der hydrolysierbaren Silangruppen beeinflussen. Bevorzugt ist R' ein Alkylrest, insbesondere mit 1 bis 6 C-Atomen. Besonders bevorzugt sind Reste R', die die Reaktivität der Silangruppen erhöhen, d.h. gute Abgangsgruppen darstellen. Insofern ist ein Methoxy - Rest gegenüber einem Ethoxy - Rest und dieser wiederum gegenüber einem Propoxyrest bevorzugt. Besonders bevorzugt ist daher R' = Ethyl und/oder Methyl, insbesondere Methyl.
Des Weiteren kann die Reaktivität von organofunktionellen Silanen auch durch die Länge der Spacer X, X' zwischen Silan - Funktionalität und organischer funktioneller Gruppe, die zur Reaktion mit dem zu modifizierenden Bestandteil dient, erheblich beeinflusst werden. Beispielhaft dafür seien die "alpha" - Silane genannt, die bei der Firma Wacker erhältlich sind, und bei denen eine Methylengruppe anstelle der bei "gamma"-Silane vorhandenen Propylengruppe zwischen Si-Atom und funktioneller Gruppe ist.

Die erfindungsgemäß bevorzugt eingesetzten, mit den Struktureinheiten (III) und/oder (IV) funktionalisierten Komponenten (B1) werden insbesondere durch Umsetzung von - bevorzugt aliphatischen - Polyisocyanaten bzw. deren durch Trimerisierung, Dimerisierung, Urethan-, Biuret-, Uretdion- und/oder Allophanatbildung abgeleiteten Polyisocyanaten mit mindestens einer Verbindung der Formel (IIIa)

H-NR-(X-SiR"ₓ(OR')₃₋ₓ) (IIIa),

und/oder mit mindestens einer Verbindung der Formel (IVa)

HN(X-SiR"ₓ(OR')₃₋ₓ)ₙ(X'-SiR'_{y}(OR')_{3-y})ₘ (IVa),

erhalten, wobei die Substituenten die oben genannte Bedeutung haben.

Die erfindungsgemäß besonders bevorzugt eingesetzten, mit den Struktureinheiten (III) und (IV) funktionalisierten Komponenten (B1) werden besonders bevorzugt durch Umsetzung von aliphatischen Polyisocyanaten bzw. deren durch Trimerisierung, Dimerisierung, Urethan-, Biuret-, Uretdion und/oder Allophanatbildung abgeleiteten Polyisocyanaten mit mindestens einer Verbindung der Formel (IIIa) und mit mindestens einer Verbindung der Formel (IVa) erhalten, wobei die Substituenten die oben genannte Bedeutung haben.

Erfindungsgemäß bevorzugte Verbindungen (IVa) sind Bis(2-ethyltrimethoxysilyl)amin, Bis(3-propyltrimethoxysilyl)amin, Bis(4-butyltrimethoxysilyl)-amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASYLAN ® der Fa. DEGUSSA bzw. Silquest ® der Fa. OSI verfügbar.

Erfindungsgemäß bevorzugte Verbindungen (IIIa) sind Aminoalkyl-trialkoxysilane, wie vorzugsweise 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, 4-Aminobutyltriethoxysilan. Besonders bevorzugte Verbindungen (Ia) sind N-(2- (trimethoxysilyl)ethyl)alkylamine, N-(3-(trimethoxysilyl)propyl)alkylamine, N-(4-(trimethoxysilyl)butyl) alkylamine, N-(2-(triethoxysilyl)ethyl)alkylamine, N-(3-(triethoxysilyl)propyl)alkylamine und/oder N-(4-(triethoxysilyl)butyl)alkylamine. Ganz besonders bevorzugt ist N-(3-(trimethoxysilyl) propyl)butylamin. Solche Aminosilane sind beispielsweise unter dem Markennamen DYNASYLAN ® der Fa. DEGUSSA bzw. Silquest ® der Fa. OSI verfügbar.

Bevorzugt sind in der Komponente (B1) zwischen 5 und 90 mol-%, insbesondere zwischen 10 und 80 mol-%, bevorzugt zwischen 20 und 70 mol-%, besonders bevorzugt zwischen 25 und 50 mol-%, der ursprünglich vorhandenen Isocyanatgruppen zu Struktureinheiten (III) und/oder (IV), bevorzugt zu Struktureinheiten (III) und (IV), umgesetzt worden.

Außerdem liegt in der silan- und isocyanatgruppenhaltigen Komponente (B1) der Gesamtgehalt an Bissilan-Struktureinheiten (IV) zwischen 10 und 100 mol-%, bevorzugt zwischen 30 und 95 mol-%, besonders bevorzugt zwischen 50 und 90 mol-%, jeweils bezogen auf die Gesamtheit der Struktureinheiten (IV) plus (III), und der Gesamtgehalt an Monosilan-Struktureinheiten (III) zwischen 90 und 0 mol-%, bevorzugt zwischen 70 und 5 mol-%, besonders bevorzugt zwischen 50 und 10 mol-%,jeweils bezogen auf die Gesamtheit der Struktureinheiten (IV) plus (III).

### Die isocyanat- und fluorhaltige Komponente (B2)

Es ist erfindungswesentlich, dass die Beschichtungsmittel mindestens eine, von der Komponente (B1) verschiedene, isocyanat- und fluorhaltige Komponente (B2) mit einem von einem oder mehreren Polyisocyanaten abgeleiteten Grundkörper enthalten.

Die als Grundkörper für die erfindungsgemäß eingesetzte isocyanatgruppenhaltige Komponente (B2) dienenden Polyisocyanate sind die bereits bei der Komponente (B1) beschriebenen Polyisocyanate und die durch Trimerisierung, Dimerisierung, Urethan-, Biuret-, Uretdion- und/oder Allophanatbildung von einem solchen Polyisocyanat abgeleiteten Polyisocyanate. In einer weiteren Ausführungsform der Erfindung sind die Isocyanatgrundkörper für die Komponente (B2) Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4, 598,131 beschrieben.
Bevorzugt werden als Grundkörper für die erfindungsgemäß eingesetzte isocyanatgruppenhaltige Komponente (B2) aliphatische und/oder cycloaliphatische Polyisocyanate eingesetzt.
Besonders bevorzugt als Grundkörper für die erfindungsgemäß eingesetzte isocyanatgruppenhaltige Komponente (B2) sind Hexamethylendiisocyanat, Isophorondiisocyanat und 4,4'-Methylendicyclohexyldiisocyanat und/oder dessen Isocyanurate und/oder dessen Biurete und/oder dessen Uretdione und/oder dessen Allophanate.
Ganz besonders bevorzugt als Grundkörper für die erfindungsgemäß eingesetzte isocyanatgruppenhaltige Komponente (B2) sind Hexamethylendiisocyanat und/oder dessen Biuret und/oder Allophanat und/oder Isocyanurat und/oder dessen Uretdion sowie Mischungen der genannten Polyisocyanate.
Der Grundkörper für die erfindungsgemäß eingesetzte isocyanatgruppenhaltige Komponente (B2) kann dabei von dem gleichen bzw. den gleichen Polyisocyanat(en) abgeleitet sein wie der Grundkörper für die erfindungsgemäß eingesetzte isocyanatgruppenhaltige Komponente (B1), die Grundkörper können sich aber auch von verschiedenen Polyisocyanaten ableiten. Bevorzugt leitet sich der Grundkörper für die erfindungsgemäß eingesetzte isocyanatgruppenhaltige Komponente (B2) dabei von dem gleichen Polyisocyanat ab wie der Grundkörper für die erfindungsgemäß eingesetzte isocyanatgruppenhaltige Komponente (B1).
Ganz besonders bevorzugt als Grundkörper sowohl für die erfindungsgemäß eingesetzte isocyanatgruppenhaltige Komponente (B1) als auch für die erfindungsgemäß eingesetzte isocyanatgruppenhaltige Komponente (B2) ist Hexamethylendiisocyanat und/oder dessen Biuret und/oder Allophanat und/oder Isocyanurat und/oder dessen Uretdion sowie deren Mischungen.
Es ist erfindungswesentlich, dass die Komponente (B2) mindestens eine Perfluoralkylgruppe der Formel (I) aufweist

CR¹₃-(CR²₂)_{f}- (I),

wobei
- R¹, R² =: unabhängig voneinander H, F und/oder CF₃ sind, aber R¹ und R² nicht gleichzeitig H sein dürfen und
- f =: 1 bis 20, bevorzugt f = 3 bis 11, besonders bevorzugt f = 5 bis 7, ist.

Die Struktureinheiten (I) werden bevorzugt durch Umsetzung von - bevorzugt aliphatischen - Polyisocyanaten bzw. deren durch Trimerisierung, Dimerisierung, Urethan-, Biuret-, Uretdion- und/oder Allophanatbildung abgeleiteten Polyisocyanaten mit mindestens einem (Per)fluoralkylmonoalkohol (FA) der Formel (Ia)

CR¹₃-(CR²₂)_{f}-(CH₂)ᵣ-O-A_{z}-H (Ia)

eingeführt, wobei
R¹, R² = unabhängig voneinander H, F, CF₃, aber R¹ und R² nicht gleichzeitig H sein dürfen,
f = 1 - 20,
r = 1 - 6,
z = 0 - 100, bevorzugt z = 0,
A = CR'R"-CR"'R""-O oder (CR'R")ₐ-O oder CO-(CR'R")_{b}-O,
R', R", R'", R"" = unabhängig voneinander H, Alkyl, Cycloalkyl, Aryl, beliebiger organischer Rest mit 1 bis 25 C-Atomen,
a,b = 3 - 5,
ist, wobei es sich bei der Polyalkylenoxid-Struktureinheit A_{z} um Homopolymere, Copolymere oder Blockpolymere aus beliebigen Alkylenoxiden oder um Polyoxyalkylenglykole oder um Polylactone handelt.

Beispiele für als Perfluoralkylalkohole (FA) geeignete Verbindungen sind beispielsweise die in der WO2008/040428, Seite 33, Zeile 4 bis Seite 34, Zeile 3 beschriebenen (Per)fluoralkylalkohole sowie die in der EP-B-1 664 222 B1, Seite 9, Abschnitt [0054], bis Seite 10, Abschnitt [57] beschriebenen (Per)fluoralkylalkohole.

Bevorzugt weist die Komponente (B2) mindestens eine Perfluoralkylgruppe der Formel (I-I) und/oder der Formel (I-II)

CF₃(CF₂)ₙ- (I-I)

F(CF₂CF₂)ₗ- (I-II)

mit
n = 1 bis 20, bevorzugt n = 3 bis 11, besonders bevorzugt n = 5 bis 7,
l = 1 bis 8, bevorzugt l = 1 bis 6, besonders bevorzugt l = 2 bis 3
auf.

Die Struktureinheiten (I-I) werden bevorzugt durch Umsetzung von - bevorzugt aliphatischen - Polyisocyanaten bzw. deren durch Trimerisierung, Dimerisierung, Urethan-, Biuret-, Uretdion- und/oder Allophanatbildung abgeleiteten Polyisocyanaten mit mindestens einem (Per)fluoralkylmonoalkohol (FA) der Formel (I-Ia) eingeführt:

CF₃-(CF₂)ₙ-(CH₂)ₒ-O-H (I-Ia)

wobei n = 1 bis 20, bevorzugt n = 3 bis 11, besonders bevorzugt n = 5 bis 7, und o = 1 bis 10, bevorzugt o = 1 bis 4 ist.

Die Struktureinheiten (I-II) werden bevorzugt durch Umsetzung von - bevorzugt aliphatischen - Polyisocyanaten bzw. deren durch Trimerisierung, Dimerisierung, Urethan-, Biuret-, Uretdion- und/oder Allophanatbildung abgeleiteten Polyisocyanaten mit mindestens einem (Per)fluoralkylmonoalkohol (FA) der Formel (I-IIa)

F(CF₂CF₂)ₗ-(CH₂CH₂O)ₘ-H (I-IIa)

eingeführt, wobei
l = 1 - 8, bevorzugt l = 1 bis 6, besonders bevorzugt l = 2 bis 3,
m = 1 bis 15, bevorzugt m = 5 bis 15 ist.

Beispiele für geeignete Perfluoralkohole sind 3,3,4,4,5,5,6,6,7,7,8,8,8-Tri-decafluoroctan-1-ol, 3,3,4,4,5,5,6,6,7,7,8,8,9,9,10,10,10-heptadecafluordecan-1-ol, 3,3,4,4,5,5,6,6,7,7,8,8,9,9,10,10,11,11,12,12,12-heneicosafluordodecan-1-ol, 3,3,4,4,5,5,6,6,7,7,8,8,9,9,10,10,11,11,12,12,13,13, 14,14,14-pentacosafluortetradecan-1-ol, 3,3,4,4,5,5,6,6,7,7,8,8,9,9,10,10, 11,11,12,12,13,13,14,14,15,15,16,16,16-nonacosafluorhexadecan-1-ol, 3,3,4,4,5,5,6,6,7,7,8,8-Dodecafluorheptan-1-ol, 3,3,4,4,5,5,6,6,7,7,8,8,9,9, 10,10-Hexadecafluornonan-1-ol, 3,3,4,4,5,5,6,6,7,7,8,8,9,9,10,10,11,11, 12,12-eicosafluorundecan-1-ol, 3,3,4,4,5,5,6,6,7,7,8,8,9,9,10,10,11,11, 12,12,13,13,14,14-tetracosafluortridecan-1-ol und 3,3,4,4,5,5,6,6,7,7,8,8, 9,9,10,10,11,11,12,12,13,13,14,14,15,15,16,16-octacosafluorpentadecan-1-ol.

Besonders bevorzugt weist die Komponente (B2) mindestens eine Perfluoralkylgruppe der Formel (I-I)

CF₃-(CF₂)ₙ- (I-I)

auf, bei der n = 1 bis 20, insbesondere n = 3 bis 11, ganz besonders bevorzugt n = 5 bis 7 ist.

Diese bevorzugten Struktureinheiten (I-I) werden bevorzugt durch Umsetzung von - bevorzugt aliphatischen - Polyisocyanaten bzw. deren durch Trimerisierung, Dimerisierung, Urethan-, Biuret-, Uretdion- und/oder Allophanatbildung abgeleiteten Polyisocyanaten mit mindestens einem (Per)fluoralkylmonoalkohol (FA) der Formel (I-Ia)

CF₃-(CF₂)ₙ-(CH₂)ₒ-OH (I-Ia)

oder Mischungen verschiedener Fluoralkohole der Formel (I-Ia) eingeführt, bei denen n = 1 bis 8, bevorzugt n = 1 bis 6, insbesondere n = 1 bis 4, und o = 1 bis 6, insbesondere o = 1 bis 4 und besonders bevorzugt o = 1 bis 2, ist.

Ganz besonders bevorzugt werden Perfluoralkylethanole der Formel (I-Ia) mit o = 2, vorzugsweise 2(Perfluorhexyl)ethanol und 2(Perfluoroctyl)ethanol und Gemische verschiedener Perfluoralkylethanole der Formel (I-IIIa), insbesondere eine Mischung aus 2(Perfluorhexyl)ethanol und 2(Perfluoroctyl)ethanol, ggf. zusammen mit anderen (Per)fluoralkylethanolen, eingesetzt. Vorzugsweise werden Perfluoralkylethanol-Gemische mit 30 bis 49,9 Gew.-% an 2(Perfluorhexyl)ethanol und 30 bis 49,9 Gew.-% an 2(Perfluoroctyl)ethanol, wie die Handelsprodukte Fluowet® EA 612 und Fluowet® EA 812; 2(Perfluorhexyl)ethanol, wie das Handelsprodukt Daikin A-1620, oder 2(Perfluoroctyl)ethanol, wie das Handelsprodukt Daikin A-1820, der Firma Daikin Industries Ltd., Osaka, Japan eingesetzt. Ganz besonders bevorzugt wird 2(Perfluorhexyl)ethanol eingesetzt.

Bevorzugt sind in der Komponente (B2) zwischen 1 und 60 mol-%, besonders bevorzugt zwischen 5 und 40 mol-% und ganz besonders bevorzugt zwischen 10 und 30 mol-%, der ursprünglich vorhandenen Isocyanatgruppen zu Struktureinheiten (I) und/oder (I-I) und/oder (I-II), bevorzugt zu Struktureinheiten (I-I), umgesetzt worden.

Bevorzugt liegt der Gesamtfluorgehalt der erfindungsgemäßen Beschichtungsmittelzusammensetzung zwischen 0,05 und 10,0 Masse-% Fluor, insbesondere zwischen 0,1 und 8,0 Masse-% Fluor, besonders bevorzugt zwischen 0,2 und 4,0 Masse-% Fluor, jeweils bezogen auf den Bindemittelanteil der Beschichtungsmittelzusammensetzung.

### Die isocyanatgruppenhaltige Komponente (B3)

Ggf. können die Beschichtungsmittelzusammensetzungen noch eine von B1 und B2 verschiedene isocyanatgruppenhaltige Komponente B3 enthalten.Als isocyanatgruppenhaltige Komponente (B3) geeignet sind die bereits bei der Komponente (B1) und (B2) beschriebenen Polyisocyanate und die durch Trimerisierung, Dimerisierung, Urethan-, Biuret-, Uretdion- und/oder Allophanatbildung von einem solchen Polyisocyanat abgeleiteten Polyisocyanate. Bevorzugt werden als Komponente (B3) Di- und Polyisocyanate eingesetzt, die sich von dem als Grundkörper für die Komponenten (B1) und (B2) eingesetzten Polyisocyanat unterscheiden. Insbesondere kommen als (B3) Isophorondiisocyanat und 4,4'-Methylendicyclohexyldiisocyanat und/oder dessen Isocyanurate und/oder dessen Biurete und/oder dessen Uretdione und/oder dessen Allophanate zum Einsatz.

### Der Katalysator (D) für die Vernetzung der Silangruppen

Als Katalysatoren für die Vernetzung der Alkoxysilyl-Einheiten sowie für die Reaktion zwischen den Hydroxylgruppen der Verbindung (A) und den Isocyanatgruppen der Verbindung (B) können an sich bekannte Verbindungen eingesetzt werden. Beispiele sind Lewis-Säuren (Elektronenmangelverbindungen), wie beispielsweise Zinnnaphtenat, Zinnbenzoat, Zinnnoctoat, Zinnbutryrat, Dibutylzinndilaurat, Dibutylzinndiacetat, Dibutylzinnoxid, Bleioctoat, sowie Katalysatoren wie in WO-A-2006/042585 beschrieben. Geeignet sind ferner auch übliche Katalysatoren auf Säurebasis, wie beispielsweise Dodecylbenzolsulfonsäure, Toluolsulfonsäure u.Ä..

Als Katalysatoren für die Vernetzung der Alkoxysilyl-Einheiten werden bevorzugt Aminaddukte der Phosphorsäure oder der Sulfonsäure eingesetzt (z.B. Nacure-Typen der Fa. King Industries).

Als Katalysator (D) werden besonders bevorzugt phosphorhaltige, insbesondere phosphor- und stickstoff-haltige Katalysatoren eingesetzt. Dabei können auch Mischungen aus zwei oder mehreren verschiedenen Katalysatoren (D) eingesetzt werden.
Beispiele für geeignete phosphorhaltige Katalysatoren (D) sind substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern. Derartige Katalysatoren sind beispielsweise in der deutschen Patentanmeldung DE-A-102005045228 beschrieben.
Insbesondere werden aber substituierte Phosphorsäuremonoester und Phosphorsäurediester, vorzugsweise aus der Gruppe, bestehend aus acyclischen Phosphorsäuremonoestern, cyclischen Phosphorsäuremonoestern, acyclischen Phosphorsäurediestern und cyclischen Phosphorsäurediestern, besonders bevorzugt Aminaddukte der Phosphorsäure-mono- und -di-ester, eingesetzt.
Ganz besonders bevorzugt werden als Katalysator (D) die entsprechenden aminblockierten Phosphorsäureester, und hier insbesondere aminblockierte Phosphorsäureethylhexylester und aminblockierte Phosphorsäurephenylester, ganz besonders bevorzugt aminblockierte Phosphorsäure-bis(2-ethylhexyl)ester eingesetzt.
Als Beispiele für Amine, mit welchem die Phosphorsäureester blockiert werden, sind insbesondere tertiäre Amine, beispielsweise bicyclische Amine, wie z. B. Diazabicyclootan (DABCO), Diazabicyclononen (DBN), Diazabicycloundecen (DBU), Dimethyldodecylamin oder Triethylamin, zu nennen. Besonders bevorzugt werden zur Blockierung der Phosphorsäureester tertiäre Amine eingesetzt, die eine gute Wirksamkeit des Katalysators bei den Härtungsbedingungen von 140 °C gewährleisten. Ganz besonders bevorzugt werden vor allem bei niedrigen Härtungstemperaturen von maximal 80°C zur Blockierung der Phosphorsäureester bicyclische Amine, insbesondere Diazabicyclootan (DABCO), eingesetzt.

Bestimmte, mit Amin blockierte Phosphorsäurekatalysatoren sind auch kommerziell erhältlich (z.B. Nacure-Typen der Fa. King Industries). Beispielsweise sei der unter der Bezeichnung Nacure 4167 von der Firma King Industries als besonders geeigneter Katalysator auf der Basis eines aminblockierten Phosphorsäureteilesters genannt.

Die Katalysatoren werden vorzugsweise in Anteilen von 0,01 bis 20 Gew.-%, besonders bevorzugt in Anteilen von 0,1 bis 10 Gew.-%, bezogen auf den Bindemittelanteil der erfindungsgemäßen Beschichtungsmittelzusammensetzung, eingesetzt. Eine geringere Wirksamkeit des Katalysators kann dabei durch entsprechend höhere Einsatzmengen teilweise kompensiert werden.

Die erfindungsgemäßen Beschichtungsmittelzusammensetzungen können noch einen weiteren Amin-Katalysator auf Basis eines bicyclischen Amins, insbesondere eines ungesättigten bicyclischen Amins, enthalten. Beispiele für geeignete Amin-Katalysatoren sind 1,5-Diazabicyclo[4.3.0]non-5-en oder 1,8-Diazabicyclo[5.4.0]undec-7-en.

Werden diese Amin-Katalysatoren eingesetzt, dann werden sie vorzugsweise in Anteilen von 0,01 bis 20 Gew.-%, besonders bevorzugt in Anteilen von 0,1 bis 10 Gew.-%, bezogen auf den Bindemittelanteil der erfindungsgemäßen Beschichtungsmittelzusammensetzung, eingesetzt.

### Die Kombination der Komponenten (A), (B1), (B2), ggf. (C) und (D) sowie weitere Komponenten der Beschichtungsmittelzusammensetzungen

Handelt es sich um einkomponentige Beschichtungsmittelzusammensetzungen, so werden isocyanatgruppenhaltige Komponenten (B1), (B2) und ggf. (B3) gewählt, deren freie Isocyanatgruppen mit Blockierungsmitteln blockiert sind. Beispielsweise können die Isocyanatgruppen mit substituierten Pyrazolen, insbesondere mit Alkyl-substituierten Pyrazolen, wie 3-Methylpyrazol, 3,5-Dimethylpyrazol, 4-Nitro-3,5-dimethypyrazol, 4-Bromo-3,5-dimethylpyrazol u. Ä. blockiert werden. Besonders bevorzugt werden die Isocyanatgruppen der Komponenten (B1), (B2) und ggf. (B3) mit 3,5-Dimethylpyrazol blockiert.

Bei den erfindungsgemäß besonders bevorzugten 2-komponentigen (2K) Beschichtungsmittelzusammensetzungen wird kurz vor der Applikation des Beschichtungsmittels eine Lackkomponente, enthaltend die polyhydroxylgruppenhaltige Komponente (A) sowie weitere nachfolgend beschriebene Komponenten, mit einer weiteren Lackkomponente, enthaltend die Polyisocyanatgruppen-haltige Komponenten (B1), (B2) und ggf. (B3) sowie gegebenenfalls weitere der nachfolgend beschriebenen Komponenten in an sich bekannter Weise vermischt.

Die Polyhydroxykomponente (A) kann in einem geeigneten Lösemittel vorliegen. Geeignete Lösemittel sind solche, die eine ausreichende Löslichkeit der Polyhydroxykomponente ermöglichen. Beispiele für solche Lösemittel sind die bereits bei der polyisocyanatgruppenhaltigen Komponente (B) aufgeführten Lösemittel (L).

Die Gewichtsanteile des Polyols (A) und ggf. (C) sowie der Polyisocyanate (B1), (B2) und ggf. (B3) werden vorzugsweise solchermaßen gewählt, dass das molare Äquivalentverhältnis der Hydroxylgruppen der polyhydroxylgruppenhaltigen Komponente (A) plus ggf. (C) zu den Isocyanatgruppen der Komponenten (B1) plus (B2) plus ggf. (B3) zwischen 1:0,9 und 1:1,5, bevorzugt zwischen 1:0,9 und 1:1,1 besonders bevorzugt zwischen 1:0,95 und 1:1,05, liegt.

Bevorzugt werden erfindungsgemäß Beschichtungsmittelzusammensetzungen eingesetzt, die von 20 bis 60 Gew.-%, bevorzugt von 25 bis 50 Gew.-%, jeweils bezogen auf den Bindemittelanteil der Beschichtungsmittelzusammensetzung, mindestens einer polyhydroxylgruppenhaltigen Komponente (A), insbesondere mindestens eines polyhydroxylgruppenhaltigen Polyacrylates (A) und/oder mindestens eines polyhydroxylgruppenhaltigen Polymethacrylates (A), enthalten.

Ebenfalls bevorzugt werden erfindungsgemäß Beschichtungsmittelzusammensetzungen eingesetzt, die von 30,5 bis 80,0 Gew.-%, bevorzugt von 40,8 bis 75,0 Gew.-%, jeweils bezogen auf den Bindemittelanteil der Beschichtungsmittelzusammensetzung, der polyisocyanatgruppenhaltigen Komponenten (B1) plus (B2) enthalten. Insbesondere werden erfindungsgemäß Beschichtungsmittelzusammensetzungen eingesetzt, die von 30,0 bis 79,5 Gew.-%, bevorzugt von 40,0 bis 74,2 Gew.-%, der polyisocyanatgruppenhaltigen Komponente (B1) und von 0,5 bis 30,0 Gew.-%, bevorzugt von 0,8 bis 25,0 Gew.-%, jeweils bezogen auf den Bindemittelanteil der Beschichtungsmittelzusammensetzung, der polyisocyanatgruppenhaltigen Komponente (B2) enthalten.
Ggf. Können die Beschichtungsmittelzusammensetzungen noch eine von B1 und B2 verschiedene isocyanatgruppenhaltige Komponente B3 enthalten. Wenn diese Komponente (B3) eingesetzt wird, dann wird sie üblicherweise in einer Menge von 0,1 bis 10 Gew.-%, bezogen auf den Bindemittelanteil der Beschichtungsmittelzusammensetzung eingesetzt.

Weiterhin bevorzugt werden erfindungsgemäß Beschichtungsmittelzusammensetzungen eingesetzt, bei denen die Komponente (B1) und die Komponente (B2) in solchen Mengen eingesetzt werden, dass das Verhältnis aus dem Bindemittelanteil der Komponente (B1) in Gew.-% zum Bindemittelanteil der Komponente (B2) in Gew.-% zwischen 0,5/1 bis 25/1, bevorzugt 1/1 bis 20/1 liegt.

Daneben können die erfindungsgemäßen Beschichtungsmittel noch ein oder mehrere Aminoplastharze (E) enthalten. Es kommen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben. In der Regel werden solche Aminoplastharze (E) in Anteilen von 0 bis 20 Gew.-%, bevorzugt von 0 bis 15 Gew.-%, bezogen auf den Bindemittelanteil der Beschichtungsmittelzusammensetzung, eingesetzt. Werden solche Aminoplastharze (E) eingesetzt, dann werden sie besonders bevorzugt in Anteilen von 3 bis 15 Gew.-%, bezogen auf den Bindemittelanteil der Beschichtungsmittelzusammensetzung, eingesetzt.

Bevorzugt enthalten die erfindungsgemäßen Beschichtungsmittelzusammensetzungen außerdem mindestens ein übliches und bekanntes, von den Komponenten (A), (B1), (B2), (B3), (D), ggf. (C) und ggf. (E) verschiedenes Lackadditiv (F) in wirksamen Mengen, d.h. in Mengen vorzugsweise bis zu 20 Gew.-%, besonders bevorzugt von 0 bis zu 10 Gew.-%, jeweils bezogen auf den Bindemittelanteil der Beschichtungsmittelzusammensetzung, enthalten.

Beispiele geeigneter Lackadditive (F) sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- von den Komponenten (A) und (C) verschiedene Reaktivverdünner, insbesondere Reaktivverdünner, die erst durch Reaktion mit weiteren Bestandteilen bzw. Wasser reaktiv werden, wie beispielsweise Incozol oder Asparaginsäureester
- von den Komponenten (A) und (C) verschiedene Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufsmittel;
- Rheologiehilfsmittel, beispielsweise auf Basis üblicher hydrophiler und/oder hydrophober pyrogener Kieselsäure, wie verschiedene Aerosil®-Typen, oder übliche Rheologiehilfsmittel auf Harnstoff-Basis
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- Flammschutzmittel.

Besonders bevorzugt sind Beschichtungsmittelzusammensetzungen, die 25 bis 50 Gew.-%, bezogen auf den Bindemittelanteil der Beschichtungsmittelzusammensetzung, mindestens eines polyhydroxylgruppenhaltigen Polyacrylates (A) und/oder mindestens eines polyhydroxylgruppenhaltigen Polymethacrylates (A) und/oder mindestens eines von der Komponente (RP) verschiedenen polyhydroxylgruppenhaltigen Polyesterpolyols (A) und/oder eines polyhydroxylgruppenhaltigen Polyurethans (A),
40,0 bis 74,2 Gew.-%, bezogen auf den Bindemittelanteil der Beschichtungsmittelzusammensetzung, mindestens einer Komponente (B1),
0,8 bis 25,0 Gew.-%, bezogen auf den Bindemittelanteil der Beschichtungsmittelzusammensetzung, mindestens einer Komponente (B2),
0 bis 10 Gew.-%, bezogen auf den Bindemittelanteil der Beschichtungsmittelzusammensetzung, mindestens einer Komponente (B3),
0 bis 5 Gew.-%, bezogen auf den Bindemittelanteil der Beschichtungsmittelzusammensetzung, der hydroxylgruppenhaltigen Komponente (C),
0 bis zu 15 Gew.-%, bezogen auf den Bindemittelanteil der Beschichtungsmittelzusammensetzung, mindestens eines Aminoplastharzes (E),
0,1 bis 10 Gew.-%, bezogen auf den Bindemittelanteil der erfindungsgemäßen Beschichtungsmittelzusammensetzung, mindestens eines Katalysators (D) für die Vernetzung und
0 bis 10 Gew.-%, bezogen auf den Bindemittelanteil der Beschichtungsmittelzusammensetzung, mindestens eines üblichen und bekannten Lackadditivs (F)
enthalten.

Der bei den Mengen der einzelnen Komponenten angegebene Bindemittelanteil der Beschichtungsmittelzusammensetzung ist jeweils die Summe aus dem Bindemittelanteil der Komponente (A) plus dem Bindemittelanteil der Komponente (B1) plus dem Bindemittelanteil der Komponente (B2) plus dem Bindemittelanteil der Komponente (B3) plus dem Bindemittelanteil der Komponente (C) plus dem Bindemittelanteil der Komponente (E).

Insbesondere handelt es sich bei den erfindungsgemäßen Beschichtungsmitteln um transparente Beschichtungsmittel, vorzugsweise Klarlacke. Die erfindungsgemäßen Beschichtungsmittel enthalten daher keine Pigmente oder nur organische transparente Farbstoffe oder transparente Pigmente.

In einer weiteren Ausführungsform der Erfindung kann die erfindungsgemäße Bindemittelmischung bzw. die erfindungsgemäße Beschichtungsmittelzusammensetzung noch weitere Pigmente und/oder Füllstoffe enthalten und zur Herstellung pigmentierter Topcoats bzw. pigmentierter Undercoats oder Füller, insbesondere pigmentierter Topcoats, dienen. Die dafür eingesetzten Pigmente und/oder Füllstoffe sind dem Fachmann bekannt. Die Pigmente werden üblicherweise in einer solchen Menge eingesetzt, dass das Pigment-zu-Bindemittel-Verhältnis zwischen 0,05: 1 und 1,5: 1 liegt, jeweils bezogen auf den Bindemittelanteil der Beschichtungsmittelzusammensetzung.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung und/oder für die Beschichtung von Automobilanbauteilen und/oder die Beschichtung von Nutzfahrzeugen.

Die Applikation der erfindungsgemäßen Beschichtungsmittelzusammensetzungen kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 20 bis 200°C, bevorzugt 40 bis 190°C und insbesondere 50 bis 180°C, während einer Zeit von 1 min bis zu 10 h, bevorzugt 2 min bis 5 h und insbesondere 3 min bis 3h, wobei bei niedrigen Temperaturen auch längere Härtezeiten zur Anwendung kommen können. Für die Automobilreparaturlackierung und für die Lackierung von Kunststoffteilen sowie die Lackierung von Nutzfahrzeugen werden dabei üblicherweise niedrigere Temperaturen angewandt, die bevorzugt zwischen 20 und 80°C, insbesondere zwischen 20 und 60°C liegen.

Die erfindungsgemäßen Beschichtungsmittel eignen sich hervorragend als dekorative, schützende und/oder effektgebende, Beschichtungen und Lackierungen von Karosserien von Fortbewegungsmitteln (insbesondere Kraftfahrzeuge, wie Fahrräder, Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Die erfindungsgemäßen Beschichtungsmittelzusammensetzungen können daher beispielsweise auf ein ggf. vorbeschichtetes Substrat aufgebracht werden, wobei die erfindungsgemäßen Beschichtungsmittel sowohl pigmentiert als auch unpigmentiert sein können. Insbesondere werden die erfindungsgemäßen Beschichtungsmittelzusammensetzungen und Lackierungen, insbesondere die Klarlackierungen, in dem technologisch und ästhetisch besonders anspruchsvollen Gebiet der Automobilserienlackierung (OEM) und zur Beschichtung von Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u.Ä., der Lackierung von Nutzfahrzeugen, wie beispielsweise von Lastkraftfahrzeugen, kettenbetriebenen Baufahrzeugen, wie z.B. Kranfahrzeugen, Radladern und Betonmischern, Omnibussen, Schienenfahrzeugen, Wasserfahrzeugen, Fluggeräten sowie landwirtschaftlichen Geräten wie Traktoren und Mähdreschern, und Teilen hiervon sowie der Automobilreparaturlackierung eingesetzt, wobei die Automobilreparaturlackierung sowohl die Reparatur der Serienlackierung an der Linie als auch die Reparatur von lokalen Defekten, wie beispielsweise Kratzern, Steinschlagschäden u.Ä., als auch die komplette Neulackierung in entsprechenden Reparaturbetrieben und Autolackierereien zur Aufwertung von Fahrzeugen umfasst.

Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

Unter ASA werden dabei im Allgemeinen schlagzähmodifizierte Styrol/Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Besonders bevorzugt werden die erfindungsgemäßen Beschichtungsmittelzusammensetzungen in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit der erfindungsgemäßen Beschichtungsmittelzusammensetzung aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus der erfindungsgemäßen Beschichtungsmittelzusammensetzung hergestellt worden ist.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird die erfindungsgemäße Beschichtungsmittelzusammensetzung aufgebracht. Anschließend wird die Zweischichtlackierung bevorzugt unter bei der Automobilserienlackierung angewandten Bedingungen bei Temperaturen von 20 bis 200°C während einer Zeit von 1 min bis zu 10 h eingebrannt, wobei bei den für die Automobilreparaturlackierung angewandten Temperaturen, die im Allgemeinen zwischen 20 und 80°C, insbesondere zwischen 20 und 60°C liegen, auch längere Härtzeiten zur Anwendung kommen können.

In einer weiteren bevorzugten Ausführungsform der Erfindung wird die erfindungsgemäße Beschichtungsmittelzusammensetzung als transparenter Klarlack zur Beschichtung von Kunststoffsubstraten, insbesondere von Kunststoff-Anbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder Plasma-Behandlung des Substrats) zunächst eine pigmentierte Basislackschicht und danach eine Schicht mit der erfindungsgemäßen Beschichtungsmittelzusammensetzung aufgetragen werden.

### Beispiele

### Herstellung des Polyacrylat-Polyols (A1)

Ein 5 l Juvo-Reaktionsgefäß mit Heizmantel, Thermometer, Rührer und mit aufgesetztem Kühler wurde mit 828,24 g eines aromatischen Lösemittels (Solventnaphtha) befüllt. Unter Rühren und Schutzgasatmosphäre (200 cm3/min Stickstoff) wurde das Lösemittel auf 156°C erhitzt. Mit Hilfe einer Dosierpumpe wurde eine Mischung aus 46,26 g Di-tert.-butylperoxide und 88,26 g Solventnaphtha gleichmäßig und tropfenweise innerhalb von 4,50 h hinzugegeben. 0,25 h nach Beginn der Zugabe wurden mit Hilfe einer Dosierpumpe 246,18 g Styrol, 605,94 g n-Butylacrylat, 265,11 g n-Butylmethacrylat, 378,69 g 4-Hydroxybutylacrylat, 378,69 g Hydroxyethylacrylat und 18,90 g Acrylsäure innerhalb von 4 h gleichmäßig hinzugegeben. Nach Beendigung der Zugabe wurde die Temperatur noch für 1,5 h gehalten und dann das Produkt auf 80°C abgekühlt. Anschließend wurde die Polymerlösung mit 143,73 g Solventnaphtha verdünnt. Das resultierende Harz hatte eine Säurezahl von 10,3 mg KOH/g (nach DIN 53402), einen Feststoffgehalt von 65% +/- 1 (60 min, 130°C) und eine Viskosität von 1153 mPa*s gemäß der Versuchsvorschrift nach DIN ISO 2884-1 (60% in Solventnaphtha).

### Herstellung des Polyacrylat-Polyols (A2)

Ein 5 l Juvo-Reaktionsgefäß mit Heizmantel, Thermometer, Rührer und mit aufgesetztem Kühler wurde mit 705,30 g eines aromatischen Lösemittels (Solventnaphtha) befüllt. Unter Rühren und Schutzgasatmosphäre (200 cm3/min Stickstoff) wurde das Lösemittel auf 140°C erhitzt. Mit Hilfe einer Dosierpumpe wurde eine Mischung aus 156,90 g Tert-Butyl-Peroxy-2-Ethylhexanoat und 75,00 g Solventnaphtha gleichmäßig und tropfenweise innerhalb von 4,75 h hinzugegeben. 0,25 h nach Beginn der Zugabe wurden mit Hilfe einer Dosierpumpe 314,40 g Styrol, 314,40 g Hydroxypropylmethacrylat, 251,10 g n-Butylmethacrylat, 408,90 g Cyclohexylmethacrylat und 282,90 g Hydroxyethylmethacrylat innerhalb von 4 h gleichmäßig hinzugegeben. Nach Beendigung der Zugabe wurde die Temperatur noch für 2,0 h gehalten und dann das Produkt auf 120°C abgekühlt. Anschließend wurde die Polymerlösung mit einer Mischung aus 53,40 g Solventnaphtha, 160,50 Methoxypropylacetat, 71,40 g Butylacetat und 205,80 Butylglykolacetat verdünnt. Das resultierende Harz hatte eine Säurezahl von 1 mg KOH/g (nach DIN 53402), einen Feststoffgehalt von 55% +/- 1 (60 min, 130°C) und eine Viskosität von 5,3 dPa*s gemäß der Versuchsvorschrift nach DIN ISO 2884-1.

### Herstellung des Polyacrylat-Polyols (A3)

Ein 5 l Juvo-Reaktionsgefäß mit Heizmantel, Thermometer, Rührer und mit aufgesetztem Kühler wurde mit 782,10 g eines aromatischen Lösemittels (Shellsol A) befüllt. Unter Rühren und Schutzgasatmosphäre (200 cm3/min Stickstoff) wurde das Lösemittel unter Überdruck (max. 3,5 bar) auf 150°C erhitzt. Mit Hilfe einer Dosierpumpe wurde eine Mischung aus 42,57 g Di-tert.-butylperoxide und 119,19 g Solventnaphtha gleichmäßig und tropfenweise innerhalb von 4,75 h hinzugegeben. 0,25 h nach Beginn der Zugabe wurden mit Hilfe einer Dosierpumpe 1374,90 g Ethylhexylacrylat, und 503,37 g Hydroxyethylacrylat innerhalb von 4 h gleichmäßig hinzugegeben. Nach Beendigung der Zugabe wurde die Polymerlösung für 1,0 h bei einer Temperatur von 140°C gehalten und dann das Produkt auf 60°C abgekühlt. Anschließend wurde die Polymerlösung mit 143,73 g Shellsol A verdünnt. Das resultierende Harz hatte eine Säurezahl von 2,3 mg KOH/g (nach DIN 53402), einen Feststoffgehalt von 67% +/- 1 (60 min, 130°C) und eine Viskosität von 250 mPa*s gemäß der Versuchsvorschrift nach DIN ISO 2884-1.

### Herstellung des teilsilanisierten Isocyanates (B1)

In einem Dreihalskolben, ausgestattet mit Rückflusskühler und einem Thermometer, werden 67,6 Gewichtsteile trimerisiertes Hexamethylendiisocyanat (HDI) (handelsübliches Desmodur® N3300 von Bayer Materials) und 25,8 Gewichtsteile Solventnaphtha vorgelegt. Unter Rückflusskühlung, Stickstoffüberschleierung und Rühren wird eine Mischung aus 3,3 Gewichtsteilen N-[3-(trimethoxysilyl)propyl]-butylamin (Dynasilan® 1189 der Fa. Evonik) und 43,0 Gewichtsteilen Bis-[3-(trimethoxysilyl)propyl]-lamin (Dynasilan® 1124 der Fa. Evonik) so zudosiert, dass 50-60°C nicht überschritten werden. Nach Ende der Dosierung wird die Reaktionstemperatur bei 50-60°C gehalten, bis der mittels Titration ermittelte Isocyanat-Massenanteil bei 60 mol-% liegt. Die Lösung des teilsilanisierten Polyisocyanats weist einen Festkörperanteil von 69 Gew.-% auf (60 min, 130°C).

Das so erhaltene teilsilanisierte Isocyanat (B1) weist einen Silanisierungsgrad von 40 Mol-%, bezogen auf die ursprünglich vorhandenen Isocyanatgruppen, einen Anteil von 10 Mol-% Monosilangruppen (I) und 90 Mol-% Bissilangruppen (II) - jeweils bezogen auf die Summe der Monosilangruppen (I) plus den Bissilangruppen (II) -, einen NCO-Gehalt von 6,2 Gew.-%, (bezogen auf 100% Feststoffgehalt) und einen Festkörpergehalt von 80 Gew.-% auf.

### Herstellung des teilfluorierten Isocyanates (B2)

Zur Herstellung des Fluor-Vernetzers werden 67,6 Gew.-Teile (0,1 Mol) des Isocyanurates von Hexamethylendiisocyanat (handelsübliches Desmodur® N3300 von Bayer Materials) in 46,4 Gew.-Teilen Butylacetat zusammen mit 0,9 Gew.-Teilen 1,4-Diazabicyclo(2.2.2)octan [DABCO Crystal] (1,33 Gew.-% bezogen auf Festkörpergehalt des Isocyanates (B2)) und 2,8 Gew.-Teilen Triethylorthoformiat (3 Gew.-% bezogen auf Festkörpergehalt des Isocyanates (B2)) in einem Rundkolben vorgelegt. Anschließend werden 25,5 Gew.-Teile (0,07 Mol) 2-(Perfluorohexyl)ethanol mithilfe eines Tropftrichters unter Rühren und Stickstoffüberschleierung bei Raumtemperatur langsam zugegeben. Es wird darauf geachtet, dass die Temperatur während der Zugaben des 2-(Perfluorohexyl)ethanols 50-60°C nicht übersteigt. Diese Temperatur wird solange (etwa 3 bis 4 h) gehalten, bis der theoretische NCO-Gehalt von 12,5% erreicht ist. Sobald dieser Wert erreicht ist, wird der Ansatz gekühlt und die folgenden Endkennzahlen bestimmt:
Das resultierende teilfluorierte Isocyanat (B2) hat einen Feststoffgehalt von 65,5%+/-1 (60 min, 130°C), einen NCO-Gehalt von 12,5%+/-0,8 (berechnet auf 100% Feststoffgehalt) und einen Fluorierungsgrad von 20 mol% bezogen auf die ursprünglich vorhandenen NCO-Gruppen.

### Herstellbeispiel für den Katalysator (D) auf Phosphorsäureester-Basis, umgesetzt mit DABCO

Wie in der WO 2009/077180 auf den Seiten 32 und 33 unter dem Punkt Katalysator auf DABCO-Basis beschrieben, wird aus 11,78 g (0,105 mol) 1,4-Diazabicyclo(2.2.2)octan [DABCO Crystal], 32,24 g (0,100 mol) Bis(2-Ethylhexyl)-phosphat, 10,00 g (0,100 mol) Methylisobutylketon und 20,00 g (0,226 mol) Ethylacetat der Katalysator hergestellt.

### Herstellung der Beschichtungsmittel (K1) bis (K3) der Beispiele 1 bis 3 und des Beschichtungsmittels des Vergleichsbeispiels V1

Die polyhydroxylgruppenhaltigen Komponenten (A1), (A2) und (A3) (Polyacrylat), der Katalysator (D), die Lichtschutzmittel, das Verlaufsmittel und das Lösungsmittel werden kurz vor der Applikation mit dem oben beschriebenen teilsilanisierten Isocyanat (B1) und mit dem oben beschriebenen teilfluorierten Isocyanat (B2) bzw. im Vergleichsbeispiel V1 nur mit dem oben beschriebenen teilsilanisierten Isocyanat (B1) vereinigt und so lange verrührt bis eine homogene Mischung entsteht.

**Tabelle 1: Zusammensetzung des erfindungsgemäßen Beschichtungsmittel (K1) bis (K3) und des Beschichtungsmittels V1 des Vergleichsbeispiels in Gew.-Teilen und Gew.-%**

| | Beispiel 1 | Beispiel 2 | Beispiel 3 | Vergleichsbeispiel V1 |
|---|---|---|---|---|
| Polyacrylat-Polyol (A1) | 42,8 | 42,8 | 42,8 | 42,8 |
| Polyacrylat-Polyol (A2) | 14,2 | 14,2 | 14,2 | 14,2 |
| Polyacrylat-Polyol (A3) | 9,6 | 9,6 | 9,6 | 9,6 |
| Butylacetat | 28,6 | 28,6 | 28,6 | 28,6 |
| Verlaufsmittel¹⁾ | 0,2 | 0,2 | 0,2 | 0,2 |
| Tinuvin® 384²⁾ | 1,1 | 1,1 | 1,1 | 1,1 |
| Tinuvin® 292 ³⁾ | 1,0 | 1,0 | 1,0 | 1,0 |
| Katalysator (D) | 1,5 | 1,5 | 1,5 | 1,5 |
| | | | | |
| Silan. Isocyanat (B1) | 65,0 | 73,0 | 81,0 | 93,5 |
| Fluor. Isocyanat (B2) | 18,0 | 12,0 | 6,0 | --- |

| | | | | |
|---|---|---|---|---|
| Erläuterungen zu Tabelle 1 ¹⁾ handelsübliches, polymeres, silikonfreies Verlaufsmittel ²⁾ Tinuvin® 384 = handelsübliches Lichtschutzmittel auf Basis eines Benztriazols der Firma BASF S.E. ³⁾ Tinuvin® 292 = handelsübliches Lichtschutzmittel auf Basis eines sterisch gehinderten Amins der Firma BASF S.E. | | | | |

### Herstellung der Beschichtungen der Beispiele 1 bis 3 und des Vergleichsbeispiels V1

Bonderbleche werden nacheinander mit einer handelsüblichen KTL (CathoGuard® 500 der Firma BASF Coatings GmbH, Schichtdicke 20 µm) und mit einem handelsüblichen wasserbasierten Füller (SecuBloc® der Firma BASF Coatings GmbH) beschichtet und jeweils eingebrannt. Danach wird mit handelsüblichem schwarzen Wasserbasislack (ColorBrite® der Firma BASF Coatings GmbH) beschichtet und bei 80°C 10 min abgelüftet. Die Beschichtungsmittel der Beispiele B1 bis B3 und des Vergleichsbeispiels V1 werden anschließend mit einer Fließbecherpistole appliziert und zusammen mit dem Basislack 20 Minuten bei 140°C eingebrannt. Die Schichtdicke des Klarlackes beträgt 30 bis 35 µm, die des Basislackes ∼15 µm.
Anschließend wird der Glanz mit Hilfe des Glanzmessgerätes micro-haze plus, Firma Byk bestimmt. Die Kratzfestigkeit der Oberflächen der resultierenden Beschichtungen wurde mit Hilfe des Crockmeter-Tests (in Anlehnung an EN ISO 105-X12 mit 10 Doppelhüben und 9N Auflagekraft unter Verwendung von 9 µm Schleifpapier (3M 281Q wetordryTMproductionTM), unter anschließender Bestimmung des Restglanzes bei 20° mit einem handelsüblichen Glanzgerät) bestimmt. Die Bestimmung der Oberflächenenergie erfolgte mit Hilfe eines Kontaktwinkelmessgeräts (DSA 100 der Firma KRÜSS) nach DIN 55660-2. In statischer Messung wurden hierzu mit den Prüfflüssigkeiten Wasser, Diiodmethan und Ethylenglykol Kontaktwinkel bestimmt und dann zur Berechnung der Oberflächenenergie das Modell nach Owens und Wendt verwendet. Die Prüfergebnisse sind in Tabelle 2 aufgeführt.

**Tabelle 2: Prüfergebnisse der Beschichtungen**

| | Beispiel 1 | Beispiel 2 | Beispiel 3 | Vergleichsbeispiel V1 |
|---|---|---|---|---|
| Glanz/Haze | 83/15 | 84/16 | 83/16 | 85/14 |
| Crockmeter | 82% | 86% | 91% | 81% |
| Oberflächenenergie [mN/m] | 16,6 | 18,7 | 25,0 | 36,0 |

### Diskussion der Prüfergebnisse

Der Vergleich des Beispiele 1 bis 3 zeigt, dass es durch die Optimierung der Formulierung möglich ist, bei vergleichbarer Kratzbeständigkeit die Oberflächenenergie zu minimieren. Der Vergleich des Beispiele 1 bis 3 mit dem Vergleichsbeispiel V1 zeigt, dass ein herkömmliches System bei weitem nicht die niedrige Oberflächenenergie aufweist wie die in den Beispielen beschriebenen Systeme.

Zusätzlich wurde von der Beschichtung des Beispiels B1 und der Beschichtung des Vergleichsbeispiels V1 die Chemikalienbeständigkeit gegenüber verschiedenen Prüfsubstanzen untersucht. Zur Bestimmung der Chemikalienbeständigkeit werden auf die mit den gehärteten Beschichtungen versehenen Prüfbleche (Gradientenofenbleche der Firma Byk-Gardener) mittels einer Pipette Tropfen (ca. 0,25 ml) der zu prüfenden Substanz im Abstand von 2 cm aufgebracht. In einem Temperaturgradientenofen (der Firma Byk-Gardener) werden sie 30 min einem Temperaturgradienten in Längsrichtung des Bleches von 35 bis 80°C unterworfen. Im Anschluss an die Einwirkung der Substanzen wurden diese unter fließendem Wasser entfernt und die Beschädigungen nach 24 h visuell beurteilt. Zur Beurteilung der Beständigkeit wird der Bereich (Temperatur) eines ersten sichtbaren Angriffs des Klarlacks angegeben.
Die Beständigkeit gegenüber 36%iger Schwefelsäure wurde außerdem noch dadurch bestimmt, dass 2 minütlich mit der Schwefelsäure getropft wird und für 1 h bei 65°C im Ofen gelagert wurde: Angegeben ist die Zeit in Minuten, nach der eine erste Anquellung beobachtet wird.
Die Beständigkeit gegenüber Ethanol, Felgenreiniger, Hohlraumkonservierer, Superkraftstoff und gegenüber Dieselkraftstoff wurde in gleicher Weise ermittelt.
Die Ergebnisse sind in Tabelle 3 angegeben.

**Tabelle 3: Chemikalienbeständigkeit der Beschichtungen des Beispiels 1 und des Vergleichsbeispiels**

| | Beispiel 1 | Vergleichs beispiel V1 |
|---|---|---|
| Schwefelsäure 1%, Temperatur °C (erste Markierung) | 51 | 48 |
| Salzsäure 10%, Temperatur °C (erste Markierung) | 57 | 52 |
| Natronlauge 10%, Temperatur °C (erste Markierung) | 43 | 46 |
| Pankreatin, Temperatur °C (erste Markierung) | 40 | <37 |
| Baumharz, Temperatur °C (erste Markierung) | <37 | 44 |
| Wasser, Temperatur °C (erste Markierung) | 63 | >73 |
| Schwefelsäure 36% (2 minütlich tropfen, 1h 65°C) erste Anquellung nach min | 12 | 10 |
| Schwefelsäure 36% (2 minütlich tropfen, 1 h 65°C) erste Anätzung nach min | 36 | 48 |
| Ethanol BMW-Snr. 116447 / Wasser 5 °d DIN 38409-6 60:40 (Vol%) 1h 60°C, Oberflächenveränderung n. 24 h | 2 | 0 |
| Felgenreiniger, Umluftofen 1h 60°C, Oberflächenveränderung n. 24 h | 1 | 2 |
| Hohlraumkonservierer, Umluftofen 1h 60°C, Oberflächenveränderung n. 24 h | 1 | 2 |
| Superkraftstoff unverbleit DIN EN 228, 10 min ständig tropfen, Oberflächenveränderung n. 24 h | 0 | 0 |
| Dieselkraftstoff | 0 | 0 |
| **Chemie gesamt** | **1** | **1** |

Außerdem wurde die Kratzbeständigkeit mit Hilfe einer Labor-Automobilwaschanlage nach DIN EN ISO 20566 DE geprüft (AMTEC-Waschbürstenbeständigkeit). Die Ergebnisse sind in Tabelle 4 angegeben.

**Tabelle 4: Kratzbeständigkeit der Beschichtungen des Beispiels 1 und des Vergleichsbeispiels**

| **Kratzfestigkeit** | Beispiel 1 | Vergleichs beispiel 1 |
|---|---|---|
| Amtec: Anfangsglanz 20° | 83 | 88 |
| Amtec: Glanz 20° ohne Reinigung | 34 | 36 |
| Amtec: Glanz 20° mit Reinigung | 75 | 82 |
| Amtec: % d Glanz ohne Reinigung | 41 | 41 |
| Amtec: % d Glanz mit Reinigung | 90 | 93 |
| Reflow 60 min 60°C: Glanz 20° ungereinigt | 35 | 37 |
| Reflow 60 min 60°C: Glanz 20° gereinigt | 78 | 82 |
| Reflow 60 min 60°C: % d Glanz ungereinigt | 42 | 42 |
| Reflow 60 min 60°C: % d Glanz gereinigt | 94 | 93 |

Schließlich wurde noch die Witterungsbeständigkeit im Konstantklima-Test nach DIN EN ISO 6270-2DE und die Steinschlagbeständigkeit nach DIN EN ISO 20567-1 DE und BMW, AA 0081 "Monoschlag" bestimmt. Die Ergebnisse sind in Tabelle 5 angegeben.

Der Vergleich des Beispiels 1 mit dem Vergleichsbeispiel V1 zeigt, dass die Systeme bis auf die gewünschte, niedrigere Oberflächenenergie vergleichbar sind.

**Tabelle 5: Witterungsbeständigkeit und Steinschlagbeständigkeit der Beschichtungen des Beispiels 1 und des Vergleichsbeispiels**

| Konstantklima 240 h | Beispiel 1 | Vergleichs beispiel 1 |
|---|---|---|
| Blasengrad sofort nach Belastung, Menge | 0 | 0 |
| Blasengrad sofort nach Belastung, Größe | 0 | 0 |
| Blasengrad 1 h n. Belastung, Menge | 0 | 0 |
| Blasengrad 1 h n. Belastung, Größe | 0 | 0 |
| | | |
| Glanz 20° vor Belastung | 83 | 88 |
| Glanz 20° nach Belastung | 83 | 88 |
| | | |
| GT 2mm vor Belastung | 1 | 1 |
| GT 1 h nach Belastung | 1 | 1 |
| GT 24 h nach Belastung | 1 | 1 |
| | | |
| Steinschlag 2 bar, Note | 2 | 2,5 |
| Monoschlag -30°C, Trennebene | zur KTL | zur KTL |
| Steinschlag mit Korrosionsprüfung VDAKWT10, Note | 2 | 2,5 |
| Rostunterwanderung Minimum mm | 1,5 | 1,4 |
| Rostunterwanderung Maximum mm | 2,5 | 2,2 |
| Rostunterwanderung Mittelwert mm | 2 | 1,7 |
| Rostunterwanderung Standardabweichung mm | 0,27 | 0,26 |
| Rostunterwanderung Variationskoeffizient % | 13,5 | 15,29 |
| Rostunterwanderung Unterrostung mm | 0,9 | 0,7 |
| Rostunterwanderung Ritzstichelbreite mm | 0,3 | 0,3 |
| Rostgrad Kantenrost (Skala BASF) | 1 | 1 |
| Rostgrad Flächenrost DIN 53210 | 0 | 0 |

## Patentansprüche

1. Nichtwässrige Beschichtungsmittelzusammensetzung enthaltend
(A) mindestens eine polyhydroxylgruppenhaltige Komponente (A),
(B1) mindestens eine isocyanat- und silangruppenhaltige Komponente (B1),
(D) mindestens einen Katalysator (D) für die Vernetzung von Silangruppen,
**dadurch gekennzeichnet, dass** sie
(B2) mindestens eine, von der Komponente (B1) verschiedene isocyanatgruppenhaltige Komponente (B2) enthält, die zusätzlich mindestens eine Perfluoralkylgruppe der Formel (I) aufweist
CR¹₃-(CR²2)_{f}- (I),
wobei
R¹, R² = unabhängig voneinander H, F und/oder CF₃ sind, aber R¹ und R² nicht gleichzeitig H sein dürfen und
f = 1 bis 20, bevorzugt f = 3 bis 11, besonders bevorzugt f = 5 bis 7,
ist.

2. Beschichtungsmittelzusammensetzung nach Anspruch 1, **dadurch gekennzeichnet, dass** die Komponente (B2) mindestens eine Perfluoralkylgruppe der Formel (I-I) und/oder der Formel (I-II)
CF₃(CF₂)ₙ- (I-I)
F(CF₂CF₂)ₗ- (I-II)
mit
n = 1 bis 20, bevorzugt n = 3 bis 11, besonders bevorzugt n = 5 bis 7 sowie
l = 1 bis 8, bevorzugt l = 1 bis 6, besonders bevorzugt l = 2 bis 3 aufweist.

3. Beschichtungsmittelzusammensetzung nach Anspruch 1 oder 2, **dadurch gekennzeichnet, dass** die Komponente (B2) herstellbar ist durch Umsetzung von Polyisocyanaten bzw. deren durch Trimerisierung, Dimerisierung, Urethan-, Biuret-, Uretdion- und/oder Allophanatbildung abgeleiteten Polyisocyanaten mit
I. mindestens einem (Per)fluoralkylmonoalkohol (FA) der Formel (I-Ia)
CF₃-(CF₂)ₙ-(CH₂)ₒ-O-H (I-Ia)
wobei n = 1 bis 20, bevorzugt n = 3 bis 11, und o = 1 bis 10, bevorzugt o = 1 bis 4 ist
und/oder
II. mindestens einem (Per)fluoralkylmonoalkohol (FA) der Formel (I-IIa)
F(CF₂CF₂)ₗ-(CH₂CH₂O)ₘ-H (I-IIa)
wobei
l = 1 - 8, bevorzugt l = 1 bis 6, besonders bevorzugt l = 2 bis 3 und m = 1 bis 15, bevorzugt m = 5 bis 15 ist.

4. Beschichtungsmittelzusammensetzung nach einem der Ansprüche 1 bis 3, **dadurch gekennzeichnet, dass** in der Komponente (B2) zwischen 1 und 60 mol-%, besonders bevorzugt zwischen 5 und 40 mol-% und ganz besonders bevorzugt zwischen 10 und 30 mol-%, der ursprünglich vorhandenen Isocyanatgruppen zu Struktureinheiten (I) und/oder (I-I) und/oder (I-II), bevorzugt zu Struktureinheiten (I-I), umgesetzt worden sind.

5. Beschichtungsmittelzusammensetzung nach einem der Ansprüche 1 bis 4, **dadurch gekennzeichnet, dass** die Komponente (B1) mindestens eine freie oder blockierte Isocyanatgruppe und mindestens eine Silangruppe der Formel (II)
-X-Si-R"ₓG₃₋ₓ (II)
mit
G = identische oder unterschiedliche hydrolysierbare Gruppen,
X = organischer Rest, insbesondere linearer und/oder verzweigter Alkylen- oder Cycloalkylenrest mit 1 bis 20 Kohlenstoffatomen, ganz besonders bevorzugt X = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
x = 0 bis 2, bevorzugt 0 bis 1, besonders bevorzugt x = 0.
aufweist

6. Beschichtungsmittelzusammensetzung nach einem der Ansprüche 1 bis 5, **dadurch gekennzeichnet, dass** die Komponente (B1) mindestens eine Isocyanatgruppe sowie
mindestens eine Struktureinheit (III) der Formel (III)
-NR-(X-SiR"x(OR')3-x) (III),
und/oder
mindestens eine Struktureinheit (IV) der Formel (IV)
-N(X-SiR"x(OR')3-x)n(X'-SiR"y(OR')3-y)m (IV),
aufweist, wobei
R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 sowie x, y = 0 bis 2 ist.

7. Beschichtungsmittelzusammensetzung nach einem der Ansprüche 1 bis 6, **dadurch gekennzeichnet, dass** die Komponente (B1) herstellbar ist durch Umsetzung von - bevorzugt aliphatischen - Polyisocyanaten bzw. deren durch Trimerisierung, Dimerisierung, Urethan-, Biuret-, Uretdion- und/oder Allophanatbildung abgeleiteten Polyisocyanaten mit
mindestens einer Verbindung der Formel (IIIa)
H-NR-(X-SiR"ₓ(OR')₃₋ₓ) (IIIa)
und/oder mit mindestens einer Verbindung der Formel (IVa)
HN(X-SiR"ₓ(OR')₃₋ₓ)ₙ(X'-SiR"_{y}(OR')_{3-y})ₘ (IVa),
wobei die Substituenten die oben genannte Bedeutung haben.

8. Beschichtungsmittelzusammensetzung nach einem der Ansprüche 1 bis 7, **dadurch gekennzeichnet, dass** in der Komponente (B1) zwischen 10 und 80 mol-%, besonders bevorzugt zwischen 20 und 70 mol-% und ganz besonders bevorzugt zwischen 25 und 50 mol-%, der ursprünglich vorhandenen Isocyanatgruppen zu Struktureinheiten (III) und/oder (IV), bevorzugt zu Struktureinheiten (III) und (IV), umgesetzt worden sind.

9. Beschichtungsmittelzusammensetzung nach einem der Ansprüche 1 bis 8, **dadurch gekennzeichnet, dass**
in der silan- und isocyanatgruppenhaltigen Komponente (B1) der Gesamtgehalt an Bissilan-Struktureinheiten (IV) zwischen 10 und 100 mol-%, bevorzugt zwischen 30 und 95 mol-%, besonders bevorzugt zwischen 50 und 90 mol-%, jeweils bezogen auf die Gesamtheit der Struktureinheiten (IV) plus (III), und der Gesamtgehalt an Monosilan-Struktureinheiten (III) zwischen 90 und 0 mol-%, bevorzugt zwischen 70 und 5 mol-%, besonders bevorzugt zwischen 50 und 10 mol-%,jeweils bezogen auf die Gesamtheit der Struktureinheiten (IV) plus (III) liegt.

10. Beschichtungsmittelzusammensetzung nach einem der Ansprüche 1 bis 9, **dadurch gekennzeichnet, dass** das oder die als Grundkörper für die Komponente (B1) und/oder die Komponente (B2) dienende(n) Polyisocyanat(e) ausgewählt ist bzw. sind aus der Gruppe der aliphatischen und/oder cycloaliphatischen Polyisocyanate, insbesondere aus der Gruppe bestehend aus Tetramethylen-1,4-diisocyanat, Hexamethylen-1,6-diisocyanat, 2,2,4-Trimethylhexan-1,6-diisocyanat, Ethylendiisocyanat, 1,12-Dodecandiisocyanat, Isophorondiisocyanat, 4,4'-Methylendicyclohexyldiisocyanat und Mischungen der vorgenannten Polyisocyanate sowie der durch Trimerisierung, Dimerisierung, Urethan-, Biuret-, Uretdion- und/oder Allophanatbildung von solchen Polyisocyanaten abgeleiteten Polyisocyanate, insbesondere der Biurete und/oder der Allophanate und/oder der Isocyanurate solcher Polyisocyanate.

11. Beschichtungsmittelzusammensetzung nach einem der Ansprüche 1 bis 10, **dadurch gekennzeichnet, dass** die Beschichtungsmittelzusammensetzung von 30,5 bis 80,0 Gew.-%, bevorzugt von 40,8 bis 75,0 Gew.-%, jeweils bezogen auf den Bindemittelanteil der Beschichtungsmittelzusammensetzung, der polyisocyanatgruppenhaltigen Komponenten (B1) plus (B2) enthält
und/oder
das Verhältnis aus dem Bindemittelanteil der Komponente (B1) in Gew.-% zum Bindemittelanteil der Komponente (B2) in Gew.-% zwischen 0,5/1 bis 25/1, bevorzugt 1/1 bis 20/1 liegt.

12. Beschichtungsmittelzusammensetzung nach einem der Ansprüche 1 bis 11, **dadurch gekennzeichnet, dass** der Katalysator (D) oder die Katalysatoren (D) der Beschichtungsmittezusammensetzung ausgewählt ist bzw. sind aus der Gruppe der substituierten Phosphonsäurediester und/oder Diphosphonsäurediester, der substituierten Phosphorsäuremonoester und/oder Phosphorsäurediester, vorzugsweise aus der Gruppe, bestehend aus acyclischen Phosphorsäurediestern und/oder cyclischen Phosphorsäurediestern, und/oder der entsprechenden aminblockierten Phosphorsäureester.

13. Beschichtungsmittelzusammensetzung nach einem der Ansprüche 1 bis 12, **dadurch gekennzeichnet, dass** die Polyole (A) eine OH-Zahl von 30 bis 400 mg KOH/g, insbesondere zwischen 70 und 250 mg KOH/g, aufweisen und/oder dass die Polyole (A) ausgewählt sind aus der Gruppe der Polyesterpolyole, Polyurethanpolyole, Polysiloxanpolyole, Polyacrylatpolyole, Polymethacrylatpolyole oder Mischungen dieser Polyole, insbesondere der Polyesterpolyole, Polyacrylatpolyole, Polymethacrylatpolyole, Polyurethanpolyole oder deren Mischungen.

14. Verfahren zur Herstellung einer Mehrschichtlackierung, bei dem auf ein gegebenenfalls vorbeschichtetes Substrat eine pigmentierte Basislackschicht und danach eine Schicht aus der Beschichtungsmittelzusammensetzung nach einem der Ansprüche 1 bis 13 aufgebracht wird.

15. Verwendung der Beschichtungsmittelzusammensetzung nach einem der Ansprüche 1 bis 13 als Klarlack beziehungsweise Anwendung des Verfahrens nach Anspruch 14 für die Automobilserienlackierung, die Lackierung von Automobil-Anbauteilen und/oder Nutzfahrzeugen und die Autoreparaturlackierung.

16. Effekt- und/oder farbgebende mehrschichtige Lackierung aus mindestens einer pigmentierten Basislackschicht und mindestens einer darauf angeordneten Klarlackschicht, **dadurch gekennzeichnet, dass** die Klarlackschicht aus einer Beschichtungsmittelzusammensetzung nach einem der Ansprüche 1 bis 13 hergestellt worden ist.

## Claims

1. Nonaqueous coating material composition comprising
(A) at least one polyhydroxyl group-containing component (A),
(B1) at least one isocyanate and silane group-containing component (B1),
(D) at least one catalyst (D) for the crosslinking of silane groups,
**characterized in that** said composition comprises
(B2)at least one isocyanate group-containing component (B2) which is different from component (B1) and which additionally has at least one perfluoroalkyl group of the formula (I)
CR¹3-(CR²₂)_{f}- (I),
where
R¹ and R² independently of one another are H, F and/or CF₃, but R¹ and R² may not both be H, and
f is 1 to 20, preferably 3 to 11, more preferably 5 to 7.

2. Coating material composition according to Claim 1, **characterized in that** component (B2) has at least one perfluoroalkyl group of the formula (I-I) and/or of formula (I-II)
CF₃(CF₂)ₙ- (I-I)
F(CF₂CF₂)₁- (I-II)
where
n is 1 to 20, preferably 3 to 11, more preferably 5 to 7, and
1 is 1 to 8, preferably 1 to 6, more preferably 2 to 3.

3. Coating material composition according to Claim 1 or 2, **characterized in that** component (B2) is preparable by reaction of polyisocyanates and/or the polyisocyanates derived therefrom by trimerization, dimerization, urethane formation, biuret formation, uretdione formation and/or allophanate formation with
I. at least one (per)fluoroalkyl monoalcohol (FA) of the formula (I-Ia)
CF₃-(CF₂)n-(CH₂)ₒ-O-H (I-Ia)
where n is 1 to 20, preferably 3 to 11, and o is 1 to 10, preferably 1 to 4,
and/or
II. at least one (per)fluoroalkyl monoalcohol (FA) of the formula (I-IIa)
F(CF₂CF₂)₁-(CH₂CH₂O)ₘ-H (I-IIa)
where
1 is 1 - 8, preferably 1 to 6, more preferably 2 to 3, and m is 1 to 15, preferably 5 to 15.

4. Coating material composition according to any of Claims 1 to 3, **characterized in that**, in component (B2), between 1 and 60 mol%, more preferably between 5 and 40 mol%, and very preferably between 10 and 30 mol% of the isocyanate groups originally present have undergone reaction to form structural units (I) and/or (I-I) and/or (I-II), preferably structural units (I-I).

5. Coating material composition according to any of Claims 1 to 4, **characterized in that** component (B1) has at least one free or blocked isocyanate group and at least one silane group of the formula (II)
-X-Si-R"ₓG₃₋ₓ (II)
where
G is identical or different hydrolyzable groups,
X is organic radical, more particularly linear and/or branched alkylene or cycloalkylene radical having 1 to 20 carbon atoms, very preferably alkylene radical having 1 to 4 carbon atoms,
R" is alkyl, cycloalkyl, aryl, or aralkyl, it being possible for the carbon chain to be interrupted by nonadjacent oxygen, sulfur, or NRa groups, where Ra is alkyl, cycloalkyl, aryl or aralkyl, and preferably R" is alkyl radical, more particularly having 1 to 6 C atoms,
x is 0 to 2, preferably 0 to 1, more preferably 0.

6. Coating material composition according to any of Claims 1 to 5, **characterized in that** component (B1) has at least one isocyanate group and also at least one structural unit (III) of the formula (III)
-NR-(X-SiR"x(OR')3-x) (III),
and/or
at least one structural unit (IV) of the formula (IV)
-N(X-SiR"x(OR')3-x)n(X'-SiR"y(OR')3-y)m (IV),
where
R is hydrogen, alkyl, cycloalkyl, aryl, or aralkyl, it being possible for the carbon chain to be interrupted by nonadjacent oxygen, sulfur, or NRa groups, where Ra is alkyl, cycloalkyl, aryl, or aralkyl,
R' is hydrogen, alkyl, or cycloalkyl, it being possible for the carbon chain to be interrupted by nonadjacent oxygen, sulfur or NRa groups, where Ra is alkyl, cycloalkyl, aryl, or aralkyl, and preferably R' is ethyl and/or methyl,
X, X' are linear and/or branched alkylene or cycloalkylene radical having 1 to 20 carbon atoms, preferably alkylene radical having 1 to 4 carbon atoms,
R" is alkyl, cycloalkyl, aryl, or aralkyl, it being possible for the carbon chain to be interrupted by nonadjacent oxygen, sulfur, or NRa groups, where Ra is alkyl, cycloalkyl, aryl, or aralkyl, and preferably R" is alkyl radical, more particularly having 1 to 6 C atoms,
n is 0 to 2, m is 0 to 2, m+n is 2, and x and y are 0 to 2.

7. Coating material composition according to any of Claims 1 to 6, **characterized in that** component (B1) is preparable by reaction of - preferably aliphatic - polyisocyanates and/or polyisocyanates derived therefrom by trimerization, dimerization, urethane formation, biuret formation, uretdione formation and/or allophanate formation with at least one compound of the formula (IIIa)
-NR-(X-SiR"ₓ(OR')₃₋ₓ) (IIIa)
and/or with at least one compound of the formula (IVa)
HN(X-SiR"'ₓ(OR')₃₋ₓ)ₙ(X'-SiR"'_{y}(OR')_{3-y})ₘ (IVa),
the substituents having the definition stated above.

8. Coating material composition according to any of Claims 1 to 7, **characterized in that**, in component (B1), between 10 and 80 mol%, more preferably between 20 and 70 mol%, and very preferably between 25 and 50 mol% of the isocyanate groups originally present have undergone reaction to form structural units (III) and/or (IV), preferably structural units (III) and (IV).

9. Coating material composition according to any of Claims 1 to 8, **characterized in that**,
in the silane and isocyanate group-containing component (B1), the total amount of bissilane structural units (IV) is between 10 and 100 mol%, preferably between 30 and 95 mol%, more preferably between 50 and 90 mol%, based in each case on the entirety of the structural units (IV) plus (III), and the total amount of monosilane structural units (III) is between 90 and 0 mol%, preferably between 70 and 5 mol%, more preferably between 50 and 10 mol%, based in each case on the entirety of the structural units (IV) plus (III).

10. Coating material composition according to any of Claims 1 to 9, **characterized in that** the polyisocyanate or polyisocyanates serving as parent structures for component (B1) and/or component (B2) is or are selected from the group of aliphatic and/or cycloaliphatic polyisocyanates, more particularly from the group consisting of tetramethylene 1,4-diisocyanate, hexamethylene 1,6-diisocyanate, 2,2,4-trimethylhexane 1,6-diisocyanate, ethylene diisocyanate, 1,12-dodecane diisocyanate, isophorone diisocyanate, 4,4'-methylenedicyclohexyl diisocyanate, and mixtures of the aforementioned polyisocyanates, and also of the polyisocyanates derived from such polyisocyanates by trimerization, dimerization, urethane formation, biuret formation, uretdione formation and/or allophanate formation, more particularly the biurets and/or the allophanates and/or the isocyanurates of such polyisocyanates.

11. Coating material composition according to any of Claims 1 to 10, **characterized in that** the coating material composition comprises from 30.5 to 80.0 wt%, preferably from 40.8 to 75.0 wt%, based in each case on the binder fraction of the coating material composition, of the polyisocyanate group-containing components (B1) plus (B2)
and/or
the ratio of the binder fraction of component (B1) in wt% to the binder fraction of component (B2) in wt% is between 0.5/1 to 25/1, preferably 1/1 to 20/1.

12. Coating material composition according to any of Claims 1 to 11, **characterized in that** the catalyst (D) or the catalysts (D) of the coating material composition is or are selected from the group of substituted phosphonic diesters and/or diphosphonic diesters, substituted phosphoric monoesters and/or phosphoric diesters, preferably from the group consisting of acyclic phosphoric diesters and/or cyclic phosphoric diesters, and/or the corresponding amine-blocked phosphoric esters.

13. Coating material composition according to any of Claims 1 to 12, **characterized in that** the polyols (A) have an OH number of 30 to 400 mg KOH/g, more particularly between 70 and 250 mg KOH/g, and/or **characterized in that** the polyols (A) are selected from the group of polyester polyols, polyurethane polyols, polysiloxane polyols, polyacrylate polyols, polymethacrylate polyols, or mixtures of these polyols, more particularly the polyester polyols, polyacrylate polyols, polymethacrylate polyols, polyurethane polyols, or mixtures thereof.

14. Method for producing a multicoat paint system by applying a pigmented basecoat film to an optionally precoated substrate and thereafter applying a film of the coating material composition according to any of Claims 1 to 13.

15. Use of the coating material composition according to any of Claims 1 to 13 as clearcoat material or application of the method according to Claim 14 for automotive OEM finishing, the finishing of parts for installation in or on automobiles and/or utility vehicles, and automotive refinish.

16. Multicoat effect and/or color paint system comprising at least one pigmented basecoat and at least one clearcoat disposed thereon, **characterized in that** the clearcoat has been produced from a coating material composition according to any of Claims 1 to 13.

## Revendications

1. Composition d'agent de revêtement non aqueuse, contenant :
(A) au moins un composant contenant des groupes polyhydroxyle (A),
(B1) au moins un composant contenant des groupes isocyanate et silane (B1),
(D) au moins un catalyseur (D) pour la réticulation de groupes silane,
**caractérisée en ce qu'**elle contient
(B2) au moins un composant contenant des groupes isocyanate (B2) différent du composant (B1), qui comprend en outre au moins un groupe perfluoroalyle de formule (I) :
CR¹₃-(CR²₂)_{f}- (I)
dans laquelle
R¹, R² = indépendamment l'un de l'autre H, F et/ou CF₃, R¹ et R² ne pouvant pas représenter simultanément H, et f = 1 à 20, de préférence f = 3 à 11, de manière particulièrement préférée f = 5 à 7.

2. Composition d'agent de revêtement selon la revendication 1, **caractérisée en ce que** le composant (B2) comprend au moins un groupe perfluoroalyle de formule (I-I) et/ou de formule (I-II)
CF₃(CF₂)ₙ- (I-I)
F(CF₂CF₂)₁- (I-II)
avec
n = 1 à 20, de préférence n = 3 à 11, de manière particulièrement préférée n = 5 à 7, et
1 = 1 à 8, de préférence 1 = 1 à 6, de manière particulièrement préférée 1 = 2 à 3.

3. Composition d'agent de revêtement selon la revendication 1 ou 2, **caractérisée en ce que** le composant (B2) peut être fabriqué par mise en réaction de polyisocyanates ou de leurs polyisocyanates dérivés par trimérisation, dimérisation, formation d'uréthane, de biuret, d'uretdione et/ou d'allophanate, avec
I. au moins un monoalcool (per)fluoroalkylique (FA) de formule (I-Ia)
CF₃-(CF₂)ₙ-(CH₂)ₒ-O-H (I-Ia)
avec n = 1 à 20, de préférence n = 3 à 11, et o = 1 à 10, de préférence o = 1 à 4,
et/ou
II. au moins un monoalcool (per)fluoroalkylique (FA) de formule (I-IIa)
F(CF₂CF₂)ₗ-(CH₂CH₂O)ₘ-H (I-IIa)
avec
1 = 1 à 8, de préférence 1 = 1 à 6, de manière particulièrement préférée 1 = 2 à 3, et m = 1 à 15, de préférence m = 5 à 15.

4. Composition d'agent de revêtement selon l'une quelconque des revendications 1 à 3, **caractérisée en ce que**, dans le composant (B2), entre 1 et 60 % en moles, de manière particulièrement préférée entre 5 et 40 % en moles et de manière tout particulièrement préférée entre 10 et 30 % en moles des groupes isocyanate initialement présents ont été transformés en unités structurales (I) et/ou (I-I) et/ou (I-II), de préférence en unités structurales (I-I).

5. Composition d'agent de revêtement selon l'une quelconque des revendications 1 à 4, **caractérisée en ce que** le composant (B1) comprend au moins un groupe isocyanate libre ou bloqué et au moins un groupe silane de formule (II)
-X-Si-R"ₓG₃₋ₓ (II)
avec
G = groupes hydrolysables identiques ou différents,
X = radical organique, notamment radical alkylène ou cycloalkylène linéaire et/ou ramifié de 1 à 20 atomes de carbone, de manière tout particulièrement préférée X = radical alkylène de 1 à 4 atomes de carbone,
R" = alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle, de préférence R" = radical alkyle, notamment de 1 à 6 atomes C,
x = 0 à 2, de préférence 0 à 1, de manière particulièrement préférée x = 0.

6. Composition d'agent de revêtement selon l'une quelconque des revendications 1 à 5, **caractérisée en ce que** le composant (B1) comprend au moins un groupe isocyanate, ainsi que
au moins une unité structurale (III) de formule (III)
-NR-(X-SiR"ₓ(OR')₃₋ₓ) (III)
et/ou
au moins une unité structurale (IV) de formule (IV)
-N(X-SiR"ₓ(OR')₃₋ₓ)ₙ(X'-SiR"'_{y}(OR')_{3-y})ₘ (IV)
avec
R = hydrogène, alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle,
R' = hydrogène, alkyle ou cycloalkyle, la chaîne carbonée pouvant être interrompue par des groupes oxygène, soufre ou NRa non voisins, avec Ra = alkyle, cycloalkyle, aryle ou aralkyle, de préférence R' = éthyle et/ou méthyle,
X, X' = radical alkylène ou cycloalkylène linéaire et/ou ramifié de 1 à 20 atomes de carbone, de préférence X, X' = radical alkylène de 1 à 4 atomes de carbone,
R" = alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle, de préférence R" = radical alkyle, notamment de 1 à 6 atomes C,
n = 0 à 2, m = 0 à 2, m+n = 2, et x, y = 0 à 2.

7. Composition d'agent de revêtement selon l'une quelconque des revendications 1 à 6, **caractérisée en ce que** le composant (B1) peut être fabriqué par mise en réaction de polyisocyanates, de préférence aliphatiques, ou leurs polyisocyanates dérivés par trimérisation, dimérisation, formation d'uréthane, de biuret, d'uretdione et/ou d'allophanate, avec
au moins un composé de formule (IIIa)
H-NR-(X-SiR"ₓ(OR')₃₋ₓ) (IIIa)
et/ou avec au moins un composé de formule (IVa)
HN(X-SiR"ₓ(OR')₃₋ₓ)ₙ(X'-SiR"_{y}(OR')_{3-y})ₘ (IVa)
les substituants ayant la signification indiquée précédemment.

8. Composition d'agent de revêtement selon l'une quelconque des revendications 1 à 7, **caractérisée en ce que**, dans le composant (B1), entre 10 et 80 % en moles, de manière particulièrement préférée entre 20 et 70 % en moles et de manière tout particulièrement préférée entre 25 et 50 % en moles, des groupes isocyanate initialement présents ont été transformés en unités structurales (III) et/ou (IV), de préférence en unités structurales (III) et (IV).

9. Composition d'agent de revêtement selon l'une quelconque des revendications 1 à 8, **caractérisée en ce que**, dans le composant contenant des groupes silane et isocyanate (B1), la teneur totale en unités structurales bis-silane (IV) est comprise entre 10 et 100 % en moles, de préférence entre 30 et 95 % en moles, de manière particulièrement préférée entre 50 et 90 % en moles, à chaque fois par rapport à la totalité des unités structurales (IV) plus (III), et la teneur totale en unités structurales monosilane (III) est comprise entre 90 et 0 % en moles, de préférence entre 70 et 5 % en moles, de manière particulièrement préférée entre 50 et 10 % en moles, à chaque fois par rapport à la totalité des unités structurales (IV) plus (III).

10. Composition d'agent de revêtement selon l'une quelconque des revendications 1 à 9, **caractérisée en ce que** le ou les polyisocyanates servant de corps de base pour le composant (B1) et/ou le composant (B2) sont choisis dans le groupe constitué par les polyisocyanates aliphatiques et/ou cycloaliphatiques, notamment dans le groupe constitué par le 1,4-diisocyanate de tétraméthylène, le 1,6-diisocyanate d'hexaméthylène, le 1,6-diisocyanate de 2,2,4-triméthylhexane, le diisocyanate d'éthylène, le diisocyanate de 1,12-dodécane, le diisocyanate d'isophorone, le diisocyanate de 4,4'-méthylène-dicyclohexyle et les mélanges des polyisocyanates susmentionnés, ainsi que les polyisocyanates dérivés par trimérisation, dimérisation, formation d'uréthane, de biuret, d'uretdione et/ou d'allophanate de tels polyisocyanate, notamment les biurets et/ou les allophanates et/ou les isocyanurates de tels polyisocyanates.

11. Composition d'agent de revêtement selon l'une quelconque des revendications 1 à 10, **caractérisée en ce que** la composition d'agent de revêtement contient de 30,5 à 80,0 % en poids, de préférence de 40,8 à 75,0 % en poids, à chaque fois par rapport à la proportion de liant de la composition de revêtement, des composants contenant des groupes polyisocyanate (B1) plus (B2),
et/ou
le rapport entre la proportion de liant du composant (B1) en % en poids et la proportion de liant du composant (B2) en % en poids est comprise entre 0,5/1 et 25/1, de préférence entre 1/1 et 20/1.

12. Composition d'agent de revêtement selon l'une quelconque des revendications 1 à 11, **caractérisée en ce que** le catalyseur (D) ou les catalyseurs (D) de la composition d'agent de revêtement sont choisis dans le groupe constitué par les diesters de l'acide phosphonique et/ou les diesters de l'acide diphosphonique substitués, les monoesters de l'acide phosphorique et/ou les diesters de l'acide phosphorique substitués, de préférence dans le groupe constitué par les diesters de l'acide phosphorique acycliques et/ou les diesters de l'acide phosphorique cycliques, et/ou les esters de l'acide phosphorique bloqués par des amines correspondants.

13. Composition d'agent de revêtement selon l'une quelconque des revendications 1 à 12, **caractérisée en ce que** les polyols (A) présentent un indice OH de 30 à 400 mg KOH/g, notamment compris entre 70 et 250 mg KOH/g, et/ou **en ce que** les polyols (A) sont choisis dans le groupe constitué par les polyester-polyols, les polyuréthane-polyols, les polysiloxane-polyols, les polyacrylate-polyols, les polyméthacrylate-polyols ou les mélanges de ces polyols, notamment les polyester-polyols, les polyacrylate-polyols, les polyméthacrylate-polyols, les polyuréthane-polyols ou leurs mélanges.

14. Procédé de fabrication d'un vernissage multicouche, selon lequel une couche de vernis de base pigmentée, puis une couche de la composition d'agent de revêtement selon l'une quelconque des revendications 1 à 13 sont appliquées sur un substrat éventuellement pré-revêtu.

15. Utilisation de la composition d'agent de revêtement selon l'une quelconque des revendications 1 à 13 en tant que vernis transparent ou utilisation du procédé selon la revendication 14 pour le vernissage en série d'automobiles, le vernissage de composants d'automobiles et/ou de véhicules utilitaires et/ou le vernissage de réparation automobile.

16. Vernissage multicouche à effet et/ou colorant constitué par au moins une couche de vernis de base pigmentée et au moins une couche de vernis transparent agencée sur celle-ci, **caractérisé en ce que** la couche de vernis transparent a été fabriquée à partir d'une composition d'agent de revêtement selon l'une quelconque des revendications 1 à 13.
